# EUROPÄISCHE PATENTSCHRIFT

(11) **EP 3 844 838 B1**
(45) Veröffentlichungstag und Bekanntmachung des Hinweises auf die Patenterteilung: **01.11.2023**
(21) Anmeldenummer: 19761803.6
(22) Anmeldetag: 27.08.2019
(51) Int. Cl.: H01M 10/613, H01M 10/6567

(54) **BATTERIEKÜHLELEMENT; BATTERIEMODULEINHEIT SOWIE BATTERIEMODUL**
BATTERY COOLING ELEMENT, BATTERY MODUL UNIT AND BATTERY MODULE
ÉLÉMENT DE REFROIDISSEMENT DE BATTERIE, UNITÉ DE MODULE DE BATTERIE ET MODULE DE BATTERIE

(30) Priorität: 31.08.2018 DE 102018214829; 27.11.2018 DE 102018129908
(43) Veröffentlichungstag der Anmeldung: 07.07.2021
(73) Patentinhaber: Kautex Textron GmbH & Co. KG, 53229 Bonn (DE)
(72) Erfinder: ENKIRCH, Georg, 56414 Salz (DE); HAAS, Felix, 53129 Bonn (DE); LIPPERHEIDE, Moritz, 53119 Bonn (DE)
(74) Vertreter: Richly & Ritschel Patentanwälte PartG mbB
(86) Internationale Anmeldenummer: PCT/EP2019/072788
(87) Internationale Veröffentlichungsnummer: WO 2020/043697

(56) Entgegenhaltungen:
- CN-A- 107 910 616
- DE-A1-102011 075 820
- DE-A1-102012 217 367
- DE-A1-102015 217 780
- US-A1- 2015 270 586

## Beschreibung

Die Erfindung betrifft ein Batteriekühlelement, welches in einem Batteriemodul und/oder eine Batteriemoduleinheit angeordnet sein kann. Ferner betrifft die Erfindung eine Batteriemoduleinheit sowie ein Batteriemodul.

Batteriemoduleinheiten, welche beispielsweise in Kraftfahrzeugen eingesetzt werden können, weisen üblicherweise ein Gehäuse auf, in welchem ein oder mehrere Batteriemodule bzw. zwei oder mehr Batteriezellen, welche zu Batteriemodulen zusammengefasst sein können, angeordnet sind. Da die Batteriemodule im Betrieb Wärme erzeugen, sind üblicherweise auch ein oder mehrere Batteriekühlelemente in dem Gehäuse angeordnet, welche als Wärmetauscher die Wärme der Batteriemodule aufnehmen und aus dem Gehäuse transportieren. Die Batteriekühlelemente sind meist steif ausgebildet, da diese meist an der Unterseite des Gehäuses angeordnet sind und damit eine tragende Funktion mit übernehmen können. Um eine ausreichende Wärmeübertragung sicherzustellen, werden häufig Wärmeleitpasten oder -folien zwischen den Batteriekühlelementen und den Batteriemodulen aufgebracht. Durch die steife Ausbildung der Batteriekühlelemente weisen diese ein hohes Gewicht auf. Dieses Gewicht muss von dem Gehäuse aufgenommen werden, so dass auch das Gehäuse aus einem steifen Material ausgebildet ist, welches ebenfalls ein hohes Gewicht aufweist. Damit weist die gesamte Batteriemoduleinheit ein unerwünscht hohes Gewicht auf.

DE102015217780 offenbart bereits ein Kühlelement mit flexibler, folienartiger Aussenfläche.

Der Erfindung liegt daher die Aufgabe zu Grunde, ein Batteriekühlelement, eine Batteriemoduleinheit sowie ein Batteriemodul zur Verfügung zu stellen, welche sich durch ein reduziertes Gewicht auszeichnen.

Die Aufgabe wird erfindungsgemäß mit den Merkmalen der unabhängigen Ansprüche gelöst. Zweckmäßige Ausgestaltungen und vorteilhafte Weiterbildungen der Erfindung sind in den Unteransprüchen angegeben.

Das Batteriekühlelement gemäß der Erfindung weist eine Außenfläche zum zumindest bereichsweisen Anliegen an einer Batteriezelle oder an einem mindestens zwei Batteriezellen aufweisenden Batteriemodul der Batteriemoduleinheit, einen von der Außenfläche zumindest bereichsweise umschlossenen Innenraum zur Aufnahme eines Kühlmediums, einen mit dem Innenraum verbundenen Kühlmediumzufluss und einen mit dem Innenraum verbundenen Kühlmediumabfluss auf, wobei die Außenfläche zumindest bereichsweise aus einer wärmeleitenden, flexibel ausgebildeten Folie ausgebildet ist, welche durch einen Fluiddruck des Kühlmediums formbar ist.

Erfindungsgemäß ist es nunmehr vorgesehen, dass das Batteriekühlelement an seiner Außenfläche nicht mehr steif ausgebildet ist, sondern dass die Außenfläche des Batteriekühlelements, mit welchem das Batteriekühlelement an dem zu kühlenden Batteriemodul oder an der zu kühlenden Batteriezelle zumindest bereichsweise anliegt, zumindest bereichsweise eine Flexibilität und damit eine Formbarkeit aufweist. Die Außenfläche ist dabei zumindest bereichsweise aus einer wärmeleitenden, flexibel ausgebildeten Folie ausgebildet. Die flexibel ausgebildete Folie kann durch ein in dem Innenraum des Batteriekühlelements angeordnetes Kühlmedium, wie beispielsweise einem Kühlfluid, wie Wasser, verformt werden. Die Folie kann an einer oder an beiden Längsseitenflächen der Außenfläche des Batteriekühlelements ausgebildet sein. Ferner kann die Folie auch an den Querseiten der Außenfläche des Batteriekühlelements ausgebildet sein. Bevorzugt ist die Außenfläche des Batteriekühlelements insbesondere an der Längsseitenfläche der Außenfläche durch eine entsprechende Folie ausgebildet, mit welcher das Batteriekühlelement an der zu kühlenden Batteriezelle und/oder an dem zu kühlenden Batteriemodul anliegt. Über den Kühlmediumzufluss kann das Kühlmedium in den Innenraum des Batteriekühlelements einströmen, den Innenraum durchströmen und aus dem Innenraum über den Kühlmediumabfluss wieder ausströmen. In Abhängigkeit des Fluiddrucks des Kühlmediums beim Durchströmen des Innenraumes kann die Folie nach außen in Richtung des zu kühlenden Batteriemoduls verformt, insbesondere nach außen gewölbt, werden, so dass sich die Folie und damit die Außenfläche des Batteriekühlelements an die Außenfläche des Batteriemoduls bzw. an die Außenfläche der Batteriezelle anlegt und dadurch ein flächiger Kontakt zwischen Batteriekühlelement und Batteriemodul bzw. Batteriezelle ausgebildet werden kann. Durch die Einstellung des Fluiddrucks des Kühlmediums kann damit auch die Wirksamkeit der Wärmeübertragung von dem Batteriemodul an das Batteriekühlelement eingestellt werden. Zudem können durch die flexible Ausgestaltung der Außenfläche des Batteriekühlelements etwaige Toleranzen ausgeglichen werden. Dadurch, dass die Folie zudem aus einem wärmeleitenden Material ausgebildet ist, kann ein guter Wärmeübergang zwischen Batteriemodul bzw. Batteriezelle und Batteriekühlelement erreicht werden, ohne dass Wärmeleitpasten eingesetzt werden müssen. Zudem zeichnet sich eine Folie gegenüber anderen Materialien durch eine geringe Wanddicke aus, wodurch die Folie einen geringen Wärmewiderstand aufweist. Ein derart ausgebildetes Batteriekühlelement weist durch die nunmehr nicht mehr steife Ausgestaltung der Außenfläche zudem ein gegenüber herkömmlichen Batteriekühlelementen deutlich reduziertes Gewicht auf. Zudem ist eine flache Bauweise des Batteriekühlelements möglich, so dass dieses besonders platzsparend ausgebildet sein kann. Zumindest bereichsweise bedeutet, dass die durch die Folie flexibel ausgebildete Außenfläche des Batteriekühlelements sich nicht über den gesamten Umfang des Batteriekühlelements erstrecken muss, sondern diese speziell ausgebildete Außenfläche auch nur einen Teilbereich der Außenumfangsfläche des Batteriekühlelements ausbilden kann. Die Folie erstreckt sind dann vorzugsweise auch nur über einen Teilbereich der Außenumfangsfläche des Batteriekühlelements. Es ist aber auch möglich, dass sich die Außenfläche und damit auch die die Außenfläche ausbildende Folie über die gesamte Außenumfangsfläche des Batteriekühlelements erstreckt.

Bevorzugt ist die Folie aus einem Mehrschichtverbund ausgebildet. Durch die Ausbildung aus einem Mehrschichtverbund kann die Stabilität der Folie erhöht werden. In Abhängigkeit der Materialien der Folie kann diese beispielsweise eine erhöhte Zugfestigkeit und/oder Reißfestigkeit aufweisen, so dass Beschädigungen an der Folie auch bei höheren auf die Folie wirkenden Kräften vermieden werden können. Zudem können durch einen Mehrschichtverbund bestimmte Eigenschaften der Folie gezielter eingestellt werden. Beispielsweise kann die Verschweißbarkeit der Folie bei der Ausbildung aus einem Mehrschichtverbund verbessert werden.

In dem Mehrschichtverbund können unterschiedliche Materialien miteinander kombiniert sein. Beispielsweise kann der Mehrschichtverbund ein Kunststoffmaterial und ein Metallmaterial aufweisen, welche jeweils in Form einer Folienschicht ausgebildet sind. Insbesondere durch das Metallmaterial kann eine elektromagnetische Verträglichkeit (EMV) der Folie verbessert werden. Die elektromagnetische Verträglichkeit bezeichnet die Fähigkeit eines Elements, andere Elemente nicht durch ungewollte elektrische oder elektromagnetische Effekte zu stören oder durch andere Elemente gestört zu werden. Beispielsweise kann der Mehrschichtverbund derart ausgebildet sein, dass eine mittlere Folienschicht aus einem Metallmaterial ausgebildet ist und dass die beiden die mittlere Folienschicht überdeckenden Außenschichten aus einem Kunststoffmaterial ausgebildet sind.

Als Metallmaterial kann beispielsweise ein Aluminiummaterial oder ein Kupfermaterial verwendet sein. Beispielsweise kann das Metallmaterial durch Bedampfung aufgebracht sein.

Das Kunststoffmaterial kann beispielsweise aus einem Polyethylen, insbesondere reißfest modifizierten Polyethylen, Polyisobutylen, Polyvinylbutyral, Ethylenvinylacetat, Polyacrylat, Polymethylenacrylat, Polyurethan, vorgereckten Polypropylen, Polyvinylacetat 5, Ethylenvinylacetat und/oder einem thermoplastischen Elastomer auf Urethanbasis sein.

Weiter ist es aber auch möglich, dass der Mehrschichtverbund aus mehreren unterschiedlichen Kunststoffmaterialien ausgebildet ist und kein Metallmaterial aufweist.

Um die Stabilität des Batteriekühlelements weiter zu erhöhen, kann in dem Innenraum des Batteriekühlelements ein Stützelement angeordnet sein. Das Stützelement kann eine Tragstruktur ausbilden, welche eine mechanische Abstützung für die Außenfläche des Batteriekühlelements und damit für die Folie zur Verfügung stellen kann. Das Stützelement kann zur Aufnahme und Weitergabe von Druckbelastungen dienen. Das Stützelement ist vorzugsweise derart geformt, dass es einen oder mehrere Strömungskanäle ausbildet, durch welchen oder durch welche das Kühlmedium im Innenraum des Batteriekühlelements hindurchströmen kann. Der Strömungskanal bzw. die Strömungskanäle können derart ausgebildet sein, dass der Strömungsweg des Kühlmediums von dem Kühlmediumzufluss zu dem Kühlmediumabfluss möglichst lang ist, damit das Kühlmedium viel Wärme aufnehmen kann und damit eine möglichst große Menge an Wärme von den Batteriemodulen abtransportiert werden kann. Die Kühlung der Batteriemodule kann dadurch besonders effektiv erfolgen. Das Stützelement kann beispielsweise gerüstartig ausgebildet sein, um die Außenfläche des Batteriekühlelements zu stützen. Bevorzugt ist das Stützelement aus einem steifen Material, insbesondere einem steifen Kunststoffmaterial, ausgebildet. Es ist aber auch möglich, dass das Stützelement aus einem Metallmaterial ausgebildet ist.

Beispielsweise kann das Stützelement eine mäanderförmige Ausgestaltung aufweisen. Durch eine Mäanderform kann die Führung des Kühlmediums in dem Innenraum des Batteriekühlelements verbessert werden, so dass die Nutzung der Kühlfähigkeit des Kühlmediums beim Durchströmen des Innenraumes besonders effektiv erfolgen kann. Bei einer mäanderförmigen Ausgestaltung weist das Stützelement vorzugsweise mehrere hintereinander angeordnete, U-förmig ausgebildete Strömungskanäle auf, wobei die Strömungskanäle bevorzugt parallel zueinander verlaufen.

Weiter ist es möglich, dass das Stützelement einen Hauptsteg und mindestens zwei in einem 90°-Winkel zu dem Hauptsteg ausgerichtete Nebenstege aufweist. Auch bei einer derartigen Ausgestaltung werden mindestens zwei Strömungskanäle für das Kühlmedium ausgebildet. In Abhängigkeit der Anzahl der Nebenstege können auch mehr als zwei Strömungskanäle ausgebildet werden, welche ebenfalls parallel zueinander verlaufen.

Das Stützelement kann bereichsweise oder vollständig elastisch ausgebildet sein. Durch eine elastische Ausbildung des Stützelements kann erreicht werden, dass sich dieses an die Folie dichtend anlegt, auch wenn sich die Folie nach außen wölbt. Das Stützelement kann sich dann an die in Richtung Innenraum zeigenden Innenseite der Folie dichtend anlegen. Durch das dichtende Anlegen kann das Stützelement eine Überströmdichtung ausbilden, welche verhindert, dass das Kühlmedium durch einen Spalt zwischen der Folie und dem Stützelement fließt und damit den eigentlichen Weg des Strömungskanals verlässt.

Weiter ist es auch möglich, dass kein Stützelement vorgesehen ist und die Stabilität der Folie alleine durch den Fluiddruck des Kühlmediums beim Durchfließen des Innenraumes des Batteriekühlelements sichergestellt wird. Beispielsweise kann die Folie derart geformt sein, dass die Folie einen mäanderförmigen Strömungskanal in dem Innenraum des Batteriekühlelements ausbildet. An einer in Richtung Innenraum zeigenden Innenseite der Folie können dafür beispielsweise in den Innenraum ragende Wände ausgebildet sein, welche einstückig mit der Folie ausgebildet sind und damit aus demselben Material wie die Folie ausgebildet sind. Die Wände können Stege ausbilden, welche in einem rechten Winkel zu der Innenseite der Folie ausgerichtet sind. Diese Wände können einen mäanderförmigen Strömungskanal in dem Innenraum des Batteriekühlelements für das Kühlmedium ausbilden.

Die Batteriekühlelemente und damit die Außenfläche eines Batteriekühlelements sind keilförmig ausgebildet. Derartige keilförmige Batteriekühlelemente können beispielsweise an den Rändern einer Batteriemoduleinheit angeordnet sein, so dass über diese keilförmig ausgebildeten Batteriekühlelemente ein Toleranzausgleich und gleichzeitig eine Verspannung der in einer Reihe angeordneten Batteriemodule erfolgen kann.

Der Kühlmediumzufluss kann einen Zuflussstutzen und der Kühlmediumabfluss kann einen Abflussstutzen aufweisen. Um eine gute und sichere Integration des Zuflussstutzens und des Abflussstutzens erhalten zu können, können der Zuflussstutzen und der Abflussstutzen mit der die Außenfläche bildenden Folie verschweißt sein. Durch die Schweißverbindung kann eine flüssigkeitsdichte Verbindung zwischen dem Zuflussstutzen bzw. dem Abflussstutzen und der Außenfläche bzw. der Folie des Batteriekühlelements erreicht werden.

Die Lösung der erfindungsgemäßen Aufgabe erfolgt ferner mittels einer Batteriemoduleinheit, welche ein eine Oberseite und eine Unterseite aufweisendes Gehäuse, mindestens ein Batteriekühlelement und mindestens zwei Batteriezellen und/oder mindestens ein mindestens zwei Batteriezellen aufweisendes Batteriemodul aufweist, wobei das Batteriekühlelement wie vorstehend beschrieben aus- und weitergebildet ist.

Eine derartige Batteriemoduleinheit weist aufgrund des wie vorstehend beschriebenen Batteriekühlelements eine besonders gute Wärmeabführung von den Batteriezellen bzw. den Batteriemodulen und damit eine besonders gute Kühlung der Batteriezellen bzw. Batteriemodule auf, wobei gleichzeitig aufgrund des reduzierten Gewichts der Batteriekühlelemente auch das Gewicht der Batteriemoduleinheit reduziert werden kann.

Mindestens zwei Batteriekühlelemente sind in dem Gehäuse jeweils vertikal zu der Unterseite des Gehäuses ausgerichtet angeordnet. Die Batteriekühlelemente sind somit vorzugsweise senkrecht stehend auf der Unterseite des Gehäuses angeordnet oder vorzugsweise senkrecht hängend zu der Unterseite des Gehäuses angeordnet. Durch die senkrecht stehende oder senkrecht hängende Anordnung der Batteriekühlelemente kann eine horizontal gerichtete Wärmeübertragung von dem oder den Batteriemodulen bzw. Batteriezellen hin zu den Batteriekühlelementen erfolgen, so dass die Wärmeübertragung dann parallel zu der Erstreckung der Unterseite des Gehäuses erfolgen kann.

Sind zwei oder mehr Batteriezellen in dem Gehäuse angeordnet, so ist vorzugsweise zwischen jeweils zwei benachbart zueinander angeordneten Batteriezellen ein Batteriekühlelement angeordnet. Die Batteriezellen sind vorzugsweise in einer Reihe nebeneinander angeordnet. Die beiden am Ende der Reihe angeordneten Batteriezellen liegen vorzugsweise nicht unmittelbar an dem Gehäuse an, sondern zwischen dem Gehäuse und am Ende der Reihe angeordneten Batteriezellen ist bevorzugt jeweils ebenfalls ein Batteriekühlelement angeordnet. Zwei oder mehr Batteriezellen können in einem Batteriemodul zusammengefasst sein, wobei dann auch in dem Batteriemodul zwischen den darin angeordneten Batteriezellen vorzugsweise jeweils ein entsprechendes Batteriekühlelement angeordnet ist. Zwischen den Batteriemodulen ist vorzugsweise ebenfalls jeweils ein Batteriekühlelement angeordnet. Zwischen einem Batteriemodul und dem Gehäuse ist vorzugsweise ebenfalls ein Batteriekühlelement angeordnet.

Sind ein oder mehr Batteriemodule bzw. zwei oder mehr Batteriezellen in dem Gehäuse angeordnet, können die Batteriemodule bzw. die Batteriezellen vorzugsweise selbsttragend in dem Gehäuse angeordnet sein, so dass das Gehäuse selber keine tragende Funktion übernehmen muss. Um dies zu erreichen, kann es beispielsweise vorgesehen sein, dass die Batteriemoduleinheit ein Verspannelement aufweist, mittels welchem die mindestens zwei Batteriezellen und/oder das mindestens eine Batteriemodul in einer sich parallel zur Ausrichtung der Unterseite erstreckenden horizontalen Richtung verspannt gehalten sein können. Das Verspannelement ist vorzugsweise in dem Gehäuse angeordnet und von dem Gehäuse umschlossen. Das Verspannelement kann die Kräfte von den Batteriemodulen bzw. den Batteriezellen und auch von den Batteriekühlelementen aufnehmen, so dass diese Kräfte nicht an das Gehäuse übertragen werden. Die Batteriemodule bzw. die Batteriezellen und die Batteriekühlelemente einer Batteriemoduleinheit können in Form eines Paketes zusammengefasst sein und als Paket in dem Verspannelement in horizontaler Richtung verspannt gehalten werden. Das Verspannelement kann damit das Gewicht der Batteriemodule bzw. der Batteriezellen und der Batteriekühlelemente aufnehmen. Das Verspannelement kann damit ein Tragelement für die Batteriemodule bzw. die Batteriezellen und die Batteriekühlelemente ausbilden. Das Verspannelement kann die in einem Paket angeordneten Batteriemodule bzw. Batteriezellen und Batteriekühlelemente gegeneinanderdrücken, so dass diese gegeneinander verspannt gehalten werden, ohne dass zusätzliche Befestigungselemente für die Batteriemodule bzw. Batteriezellen und/oder die Batteriekühlelemente in dem Gehäuse notwendig sind. Durch das horizontale Verspannen erfolgt eine Gewichtsaufnahme durch das Verspannelement senkrecht zu der Erstreckung der Unterseite des Gehäuses. Das Verspannelement kann eine positionsgenaue Anordnung und ein positionsgenaues Halten der Batteriemodule bzw. Batteriezellen und Batteriekühlelemente in dem Gehäuse ermöglichen, so dass ein unerwünschtes Verrutschen der Batteriemodule bzw. der Batteriezellen und/oder der Batteriekühlelemente zueinander vermieden werden kann. Durch das horizontale Verspannen mittels des Verspannelements können zudem Fertigungstoleranzen ausgeglichen werden. Zudem kann mittels des horizontalen Verspannens die Gesamtsteifigkeit der Batteriemoduleinheit erhöht werden.

Das Verspannelement ist vorzugsweise rahmenförmig ausgebildet und kann die mindestens zwei Batteriezellen und/oder das mindestens eine Batteriemodul umgreifen. Zusammen mit den Batteriezellen bzw. den Batteriemodulen umgreift das Verspannelement dann auch die Batteriekühlelemente, welche mit den Batteriezellen bzw. den Batteriemodulen in einem Paket angeordnet sind. Das Verspannelement kann durch die rahmenförmige Ausgestaltung umlaufend um die Batteriezellen bzw. die Batteriemodule und die Batteriekühlelemente angeordnet sein.

Um die Wirkung der horizontalen Verspannung durch das Verspannelement erhöhen bzw. verbessern zu können, können zwei sich gegenüberliegende Querseiten des Verspannelements in einem Winkel α > 0° zu einer vertikal verlaufenden Z-Achse geneigt angeordnet sein. Durch die geneigte Anordnung der beiden Querseiten des Verspannelements kann die Position der Batteriemodule bzw. der Batteriezellen und der Batteriekühlelemente sicher beibehalten werden, so dass ein ungewolltes Verrutschen oder Verkippen der Batteriemodule bzw. der Batteriezellen und der Batteriekühlelemente verhindert werden kann. Zudem können dadurch Toleranzen ausgeglichen werden. Die beiden Querseiten sind vorzugsweise im gleichen Winkel α geneigt angeordnet. Vorzugsweise sind die Querseiten derart geneigt, dass sie in Richtung der Unterseite des Gehäuses zueinander laufend angeordnet sind, so dass sich der Raum zwischen den beiden Querseiten in Richtung der Unterseite des Gehäuses verjüngt. Der Winkel α kann beispielsweise zwischen 2° und 45°, bevorzugt zwischen 5° und 30° liegen.

Sind die sich gegenüberliegenden Querseiten des Verspannelements geneigt zueinander angeordnet, so kann zwischen den Querseiten des Verspannelements und einem Batteriemodul des mindestens einem Batteriemoduls und/oder einer Batteriezelle der mindestens zwei Batteriezellen jeweils ein Batteriekühlelement, welches eine eine Keilform aufweisende Außenfläche aufweist, angeordnet sein. Die Keilform des Batteriekühlelements kann mit der geneigten Anordnung der jeweiligen Querseite, an welcher das Batteriekühlelement anliegt, zusammenwirken. Durch die Keilform kann die Übertragung einer Anpresskraft von dem Verspannelement über das Batteriekühlelement auf die Batteriemodule bzw. die Batteriezellen verbessert werden.

Um die Positionierung der einzelnen Elemente in einer Batteriemoduleinheit weiter verbessern zu können, kann es weiter vorgesehen sein, dass das Batteriekühlelement mit einer vertikal auf das Batteriekühlelement wirkenden Kraft beaufschlagt wird. Die vertikal wirkende Kraft wirkt vorzugsweise senkrecht zu der Anpresskraft des Verspannelements. Die vertikal wirkende Kraft kann beispielsweise durch ein Zugelement oder ein Druckelement auf das Batteriekühlelement aufgebracht werden. Beispielsweise kann ein Zugelement vorgesehen sein, welches an dem Batteriekühlelement und dem Gehäuse und/oder dem Verspannelement befestigt ist, um die vertikal wirkende Kraft aufzubringen. Insbesondere in Kombination mit einer Keilform eines Batteriekühlelements und einer geneigten Anordnung einer Querseite des Verspannelements kann die vertikal wirkende Kraft vorteilhaft sein.

Weiter kann es vorgesehen sein, dass mindestens eins des mindestens einen Batteriekühlelements horizontal zu der Unterseite des Gehäuses ausgerichtet angeordnet ist. Bei dieser Ausgestaltung sind damit auch zwischen der Unterseite des Gehäuses und der Batteriemodule bzw. der Batteriezellen ein oder mehrere Batteriekühlelemente angeordnet.

Um das Gewicht der Batteriemoduleinheit weiter reduzieren zu können, kann das Gehäuse aus einem Kunststoffmaterial ausgebildet sein. Insbesondere, wenn ein Verspannelement vorgesehen ist, muss das Gehäuse keine tragende Funktion mehr aufweisen, so dass das Gehäuse dann aus einem sehr leichten Material, insbesondere einem sehr leichten Kunststoffmaterial, ausgebildet sein kann. Als Kunststoffmaterial kann beispielsweise Polyethylen oder Polyamid verwendet werden.

Weiter ist es möglich, dass das Batteriekühlelement in das Gehäuse integriert ist. Das Batteriekühlelement kann somit bereits als Teil des Gehäuses der Batteriemoduleinheit ausgebildet sein. Vorzugsweise ist das Batteriekühlelement an der Unterseite des Gehäuses ausgebildet, so dass es sich mit seiner Längsseitenfläche horizontal und damit parallel der Unterseite des Gehäuses erstreckt. Die Batteriemodule und/oder die Batteriezellen können dann auf dem Batteriekühlelement angeordnet werden, so dass die Batteriemodule und/oder die Batteriezellen von unten, d. h. an ihrer Unterseite, mittels des Batteriekühlelements gekühlt werden können.

Bevorzugt ist ein Teil einer Außenumfangsfläche des Batteriekühlelements durch die Unterseite des Gehäuses ausgebildet, wodurch der Anzahl der notwendigen Teile reduziert werden kann.

Die Folie des Batteriekühlelements kann vorzugsweise an dem Gehäuse befestigt sein. Die Befestigung der Folie an dem Gehäuse kann beispielsweise stoffschlüssig, beispielsweise durch verschweißen, verkleben und/oder umspritzen, ausgebildet sein. Um eine Auflagefläche zur Befestigung der Folie an dem Gehäuse vorzusehen, kann an der Innenseite des Gehäuses ein Steg vorgesehen sein, welcher vorzugsweise umlaufend an der Innenseite ausgebildet ist. An dem Steg, welche in den Innenraum des Gehäuses hineinragt kann die Folie befestigt sein.

Weiter kann es möglich sein, dass das Gehäuse ein Tragelement aufweist, an welchem die Folie des Batteriekühlelements befestigt ist. Das Tragelement kann einstückig mit dem Gehäuse ausgebildet sein oder es kann als ein separates Teil zu dem Gehäuse ausgebildet sein. Das Tragelement kann derart geformt sein, dass es einen oder mehrere Strömungskanäle des Batteriekühlelements ausbilden kann.

Die Lösung der erfindungsgemäßen Aufgabe erfolgt zudem mittels einem Batteriemodul, welches ein Gehäuse, mindestens zwei in dem Gehäuse angeordnete Batteriezellen und mindestens ein in dem Gehäuse angeordnetes Batteriekühlelement aufweist, wobei das Batteriekühlelement wie vorstehend beschrieben aus- und weitergebildet ist.

Ein derartiges Batteriemodul weist aufgrund des wie vorstehend beschriebenen Batteriekühlelements eine besonders gute Wärmeabführung von den Batteriezellen und damit eine besonders gute Kühlung der Batteriezellen auf, wobei gleichzeitig aufgrund des reduzierten Gewichts der Batteriekühlelemente auch das Gewicht des Batteriemoduls reduziert werden kann.

In dem Gehäuse sind mindestens zwei Batteriekühlelemente angeordnet, welche jeweils vertikal zu einer Unterseite des Gehäuses ausgerichtet angeordnet sind.

Die Batteriekühlelemente sind somit vorzugsweise senkrecht stehend auf der Unterseite des Gehäuses angeordnet oder vorzugsweise senkrecht hängend zu der Unterseite des Gehäuses angeordnet. Durch die senkrecht stehende oder senkrecht hängende Anordnung der Batteriekühlelemente kann eine horizontal gerichtete Wärmeübertragung von den Batteriezellen hin zu den Batteriekühlelementen erfolgen, so dass die Wärmeübertragung dann parallel zu der Erstreckung der Unterseite des Gehäuses erfolgen kann.

Sind zwei oder mehr Batteriezellen in dem Gehäuse angeordnet, so ist vorzugsweise zwischen jeweils zwei benachbart zueinander angeordneten Batteriezellen ein Batteriekühlelement angeordnet. Die Batteriezellen sind vorzugsweise in einer Reihe nebeneinander angeordnet. Die beiden am Ende der Reihe angeordneten Batteriezellen liegen vorzugsweise nicht unmittelbar an dem Gehäuse an, sondern zwischen dem Gehäuse und am Ende der Reihe angeordneten Batteriezellen ist bevorzugt jeweils ebenfalls ein Batteriekühlelement angeordnet.

Sind zwei oder mehr Batteriezellen in dem Gehäuse angeordnet, können die Batteriezellen vorzugsweise selbsttragend in dem Gehäuse angeordnet sein, so dass das Gehäuse selber keine tragende Funktion übernehmen muss. Um dies zu erreichen, kann es beispielsweise vorgesehen sein, dass das Batteriemodul ein Verspannelement aufweist, mittels welchem die mindestens zwei Batteriezellen und das mindestens eine Batteriekühlelement in einer sich parallel zur Ausrichtung der Unterseite erstreckenden horizontalen Richtung verspannt gehalten sein können. Das Verspannelement ist vorzugsweise in dem Gehäuse angeordnet und von dem Gehäuse umschlossen. Das Verspannelement kann die Kräfte von den Batteriezellen und auch von den Batteriekühlelementen aufnehmen, so dass diese Kräfte dann nicht an das Gehäuse übertragen werden. Die Batteriezellen und die Batteriekühlelemente einer Batteriemoduleinheit können in Form eines Paketes zusammengefasst sein und als Paket in dem Verspannelement in horizontaler Richtung verspannt gehalten werden. Das Verspannelement kann damit das Gewicht der Batteriezellen und der Batteriekühlelemente aufnehmen. Das Verspannelement kann damit ein Tragelement für die Batteriezellen und die Batteriekühlelemente ausbilden. Das Verspannelement kann die in einem Paket angeordneten Batteriezellen und Batteriekühlelemente gegeneinanderdrücken, so dass diese gegeneinander verspannt gehalten werden, ohne dass zusätzliche Befestigungselemente für die Batteriezellen und/oder die Batteriekühlelemente in dem Gehäuse notwendig sind. Durch das horizontale Verspannen erfolgt eine Gewichtsaufnahme durch das Verspannelement senkrecht zu der Erstreckung der Unterseite des Gehäuses. Das Verspannelement kann eine positionsgenaue Anordnung und ein positionsgenaues Halten der Batteriezellen und Batteriekühlelemente in dem Gehäuse ermöglichen, so dass ein unerwünschtes Verrutschen der Batteriezellen und/oder der Batteriekühlelemente zueinander vermieden werden kann. Durch das horizontale Verspannen mittels des Verspannelements können zudem Fertigungstoleranzen ausgeglichen werden. Zudem kann mittels des horizontalen Verspannens die Gesamtsteifigkeit des Batteriemoduls erhöht werden.

Das Verspannelement ist vorzugsweise rahmenförmig ausgebildet und kann die mindestens zwei Batteriezellen und das mindestens eine Batteriemodul umgreifen. Zusammen mit den Batteriezellen umgreift das Verspannelement damit auch die Batteriekühlelemente, welche mit den Batteriezellen in einem Paket angeordnet sind. Das Verspannelement kann durch die rahmenförmige Ausgestaltung umlaufend um die Batteriezellen und die Batteriekühlelemente angeordnet sein.

Um die Wirkung der horizontalen Verspannung durch das Verspannelement erhöhen bzw. verbessern zu können, können zwei sich gegenüberliegende Querseiten des Verspannelements in einem Winkel β > 0° zu einer vertikal verlaufenden Z-Achse geneigt angeordnet sein. Durch die geneigte Anordnung der beiden Querseiten des Verspannelements kann die Position der Batteriezellen und der Batteriekühlelemente sicher beibehalten werden, so dass ein ungewolltes Verrutschen oder Verkippen der Batteriezellen und der Batteriekühlelemente verhindert werden kann. Zudem können dadurch Toleranzen ausgeglichen werden. Die beiden Querseiten sind vorzugsweise im gleichen Winkel β geneigt angeordnet. Vorzugsweise sind die Querseiten derart geneigt, dass sie in Richtung der Unterseite des Gehäuses zueinander laufend angeordnet sind, so dass sich der Raum zwischen den beiden Querseiten in Richtung der Unterseite des Gehäuses verjüngt. Der Winkel β kann beispielsweise zwischen 2° und 45°, bevorzugt zwischen 5° und 30° liegen.

Sind die sich gegenüberliegenden Querseiten des Verspannelements geneigt zueinander angeordnet, so kann zwischen den Querseiten des Verspannelements und einer Batteriezelle der mindestens zwei Batteriezellen jeweils ein Batteriekühlelement, welches eine eine Keilform aufweisende Außenfläche aufweist, angeordnet sein. Die Keilform des Batteriekühlelements kann mit der geneigten Anordnung der jeweiligen Querseite, an welcher das Batteriekühlelement anliegt, zusammenwirken. Durch die Keilform kann die Übertragung einer Anpresskraft von dem Verspannelement über das Batteriekühlelement auf die Batteriezellen verbessert werden.

Um die Positionierung der einzelnen Elemente in einem Batteriemodul weiter verbessern zu können, kann es weiter vorgesehen sein, dass das Batteriekühlelement mit einer vertikal auf das Batteriekühlelement wirkenden Kraft beaufschlagt wird. Die vertikal wirkende Kraft wirkt vorzugsweise senkrecht zu der Anpresskraft des Verspannelements. Die vertikal wirkende Kraft kann beispielsweise durch ein Zugelement oder ein Druckelement auf das Batteriekühlelement aufgebracht werden. Beispielsweise kann ein Zugelement vorgesehen sein, welches an dem Batteriekühlelement und dem Gehäuse und/oder dem Verspannelement befestigt ist, um die vertikal wirkende Kraft aufzubringen. Insbesondere in Kombination mit einer Keilform eines Batteriekühlelements und einer geneigten Anordnung einer Querseite des Verspannelements kann die vertikal wirkende Kraft vorteilhaft sein.

Um das Gewicht des Batteriemoduls weiter reduzieren zu können, kann das Gehäuse aus einem Kunststoffmaterial ausgebildet sein. Insbesondere, wenn ein Verspannelement vorgesehen ist, muss das Gehäuse keine tragende Funktion mehr aufweisen, so dass das Gehäuse dann aus einem sehr leichten Material, insbesondere einem sehr leichten Kunststoffmaterial, ausgebildet sein kann. Als Kunststoffmaterial kann beispielsweise Polyethylen oder Polyamid verwendet werden.

Das Batteriemodul kann in einer wie vorstehend beschriebenen, aus- und weitergebildeten Batteriemoduleinheit angeordnet sein. Eine Batteriemoduleinheit kann damit ein oder mehrere wie vorstehend beschriebene Batteriemodule aufweisen.

Weiter erfolgt die Lösung der erfindungsgemäßen Aufgabe mit einer Batteriemoduleinheit, welche ein eine Oberseite und eine Unterseite aufweisendes Gehäuse, mindestens zwei Batteriezellen und/oder mindestens ein mindestens zwei Batteriezellen aufweisendes Batteriemodul, und ein Verspannelement, mittels welchem die mindestens zwei Batteriezellen und/oder das mindestens eine Batteriemodul in einer sich parallel zur Ausrichtung der Unterseite erstreckenden horizontalen Richtung verspannt gehalten sind, aufweist.

Sind ein oder mehr Batteriemodule bzw. zwei oder mehr Batteriezellen in dem Gehäuse angeordnet, können die Batteriemodule bzw. die Batteriezellen vorzugsweise selbsttragend in dem Gehäuse angeordnet sein, so dass das Gehäuse selber keine tragende Funktion übernehmen muss. Um dies zu erreichen, weist die Batteriemoduleinheit ein Verspannelement auf, mittels welchem die mindestens zwei Batteriezellen und/oder das mindestens eine Batteriemodul in einer sich parallel zur Ausrichtung der Unterseite erstreckenden horizontalen Richtung verspannt gehalten sein können. Das Verspannelement ist vorzugsweise in dem Gehäuse angeordnet und von dem Gehäuse umschlossen. Das Verspannelement kann die Kräfte von den Batteriemodulen bzw. den Batteriezellen und auch von den Batteriekühlelementen, wenn diese vorgesehen sind, aufnehmen, so dass diese Kräfte nicht an das Gehäuse übertragen werden. Die Batteriemodule bzw. die Batteriezellen und gegebenenfalls die Batteriekühlelemente einer Batteriemoduleinheit können in Form eines Paketes zusammengefasst sein und als Paket in dem Verspannelement in horizontaler Richtung verspannt gehalten werden. Das Verspannelement kann damit das Gewicht der Batteriemodule bzw. der Batteriezellen und, falls vorhanden, der Batteriekühlelemente aufnehmen. Das Verspannelement kann damit ein Tragelement für die Batteriemodule bzw. die Batteriezellen und die gegebenenfalls vorgesehenen Batteriekühlelemente ausbilden. Das Verspannelement kann die in einem Paket angeordneten Batteriemodule bzw. Batteriezellen und gegebenenfalls vorgesehenen Batteriekühlelemente gegeneinanderdrücken, so dass diese gegeneinander verspannt gehalten werden, ohne dass zusätzliche Befestigungselemente für die Batteriemodule bzw. Batteriezellen und/oder die Batteriekühlelemente in dem Gehäuse notwendig sind. Durch das horizontale Verspannen erfolgt eine Gewichtsaufnahme durch das Verspannelement senkrecht zu der Erstreckung der Unterseite des Gehäuses. Das Verspannelement kann eine positionsgenaue Anordnung und ein positionsgenaues Halten der Batteriemodule bzw. Batteriezellen und der gegebenenfalls vorgesehenen Batteriekühlelemente in dem Gehäuse ermöglichen, so dass ein unerwünschtes Verrutschen der Batteriemodule bzw. der Batteriezellen und/oder der Batteriekühlelemente zueinander vermieden werden kann. Durch das horizontale Verspannen mittels des Verspannelements können zudem Fertigungstoleranzen ausgeglichen werden. Zudem kann mittels des horizontalen Verspannens die Gesamtsteifigkeit der Batteriemoduleinheit erhöht werden. Durch das Vorsehen eines Verspannelements muss das Gehäuse keine tragende Funktion mehr aufweisen, so dass das Gehäuse dann aus einem sehr leichten Material, insbesondere einem sehr leichten Kunststoffmaterial, ausgebildet sein kann.

Das Verspannelement ist vorzugsweise rahmenförmig ausgebildet und kann die mindestens zwei Batteriezellen und/oder das mindestens eine Batteriemodul umgreifen. Zusammen mit den Batteriezellen bzw. den Batteriemodulen umgreift das Verspannelement dann auch, falls vorhanden, die Batteriekühlelemente, welche mit den Batteriezellen bzw. den Batteriemodulen in einem Paket angeordnet sein können. Das Verspannelement kann durch die rahmenförmige Ausgestaltung umlaufend um die Batteriezellen bzw. die Batteriemodule und die gegebenenfalls vorgesehenen Batteriekühlelemente angeordnet sein.

Um die Wirkung der horizontalen Verspannung durch das Verspannelement erhöhen bzw. verbessern zu können, können zwei sich gegenüberliegende Querseiten des Verspannelements in einem Winkel α > 0° zu einer vertikal verlaufenden Z-Achse geneigt angeordnet sein. Durch die geneigte Anordnung der beiden Querseiten des Verspannelements kann die Position der Batteriemodule bzw. der Batteriezellen und der gegebenenfalls vorhandenen Batteriekühlelemente sicher beibehalten werden, so dass ein ungewolltes Verrutschen oder Verkippen der Batteriemodule bzw. der Batteriezellen und der gegebenenfalls vorgesehenen Batteriekühlelemente verhindert werden kann. Zudem können dadurch Toleranzen ausgeglichen werden. Die beiden Querseiten sind vorzugsweise im gleichen Winkel α geneigt angeordnet. Vorzugsweise sind die Querseiten derart geneigt, dass sie in Richtung der Unterseite des Gehäuses zueinander laufend angeordnet sind, so dass sich der Raum zwischen den beiden Querseiten in Richtung der Unterseite des Gehäuses verjüngt. Der Winkel α kann beispielsweise zwischen 2° und 45°, bevorzugt zwischen 5° und 30° liegen.

Sind die sich gegenüberliegenden Querseiten des Verspannelements geneigt zueinander angeordnet, so kann zwischen den Querseiten des Verspannelements und einem Batteriemodul des mindestens einem Batteriemoduls und/oder einer Batteriezelle der mindestens zwei Batteriezellen jeweils ein Batteriekühlelement, welches eine eine Keilform aufweisende Außenfläche aufweist, angeordnet sein. Die Keilform des Batteriekühlelements kann mit der geneigten Anordnung der jeweiligen Querseite, an welcher das Batteriekühlelement anliegt, zusammenwirken. Durch die Keilform kann die Übertragung einer Anpresskraft von dem Verspannelement über das Batteriekühlelement auf die Batteriemodule bzw. die Batteriezellen verbessert werden.

Das Batteriekühlelement kann wie vorstehend beschrieben aus- und weitergebildet sein.

Um die Positionierung der einzelnen Elemente in einer Batteriemoduleinheit weiter verbessern zu können, kann es weiter vorgesehen sein, dass das Batteriekühlelement mit einer vertikal auf das Batteriekühlelement wirkenden Kraft beaufschlagt wird. Die vertikal wirkende Kraft wirkt vorzugsweise senkrecht zu der Anpresskraft des Verspannelements. Die vertikal wirkende Kraft kann beispielsweise durch ein Zugelement oder ein Druckelement auf das Batteriekühlelement aufgebracht werden. Beispielsweise kann ein Zugelement vorgesehen sein, welches an dem Batteriekühlelement und dem Gehäuse und/oder dem Verspannelement befestigt ist, um die vertikal wirkende Kraft aufzubringen. Insbesondere in Kombination mit einer Keilform eines Batteriekühlelements und einer geneigten Anordnung einer Querseite des Verspannelements kann die vertikal wirkende Kraft vorteilhaft sein.

Ferner wird die erfindungsgemäße Aufgabe mittels eines Batteriemoduls gelöst, welches ein Gehäuse, mindestens zwei in dem Gehäuse angeordneten Batteriezellen, und ein Verspannelement, mittels welchem die mindestens zwei Batteriezellen in einer sich parallel zur Ausrichtung der Unterseite erstreckenden horizontalen Richtung verspannt gehalten sind, aufweist.

Sind zwei oder mehr Batteriezellen in dem Gehäuse angeordnet, können die Batteriezellen vorzugsweise selbsttragend in dem Gehäuse angeordnet sein, so dass das Gehäuse selber keine tragende Funktion übernehmen muss. Um dies zu erreichen, weist das Batteriemodul ein Verspannelement auf, mittels welchem die mindestens zwei Batteriezellen in einer sich parallel zur Ausrichtung der Unterseite erstreckenden horizontalen Richtung verspannt gehalten sein können. Das Verspannelement ist vorzugsweise in dem Gehäuse angeordnet und von dem Gehäuse umschlossen. Das Verspannelement kann die Kräfte von den Batteriezellen und auch von gegebenenfalls vorgesehenen Batteriekühlelementen aufnehmen, so dass diese Kräfte dann nicht an das Gehäuse übertragen werden. Die Batteriezellen und die gegebenenfalls vorgesehenen Batteriekühlelemente einer Batteriemoduleinheit können in Form eines Paketes zusammengefasst sein und als Paket in dem Verspannelement in horizontaler Richtung verspannt gehalten werden. Das Verspannelement kann damit das Gewicht der Batteriezellen und der gegebenenfalls vorgesehenen Batteriekühlelemente aufnehmen. Das Verspannelement kann damit ein Tragelement für die Batteriezellen und die gegebenenfalls vorgesehenen Batteriekühlelemente ausbilden. Das Verspannelement kann die in einem Paket angeordneten Batteriezellen und gegebenenfalls vorgesehenen Batteriekühlelemente gegeneinanderdrücken, so dass diese gegeneinander verspannt gehalten werden, ohne dass zusätzliche Befestigungselemente für die Batteriezellen und/oder die Batteriekühlelemente in dem Gehäuse notwendig sind. Durch das horizontale Verspannen erfolgt eine Gewichtsaufnahme durch das Verspannelement senkrecht zu der Erstreckung der Unterseite des Gehäuses. Das Verspannelement kann eine positionsgenaue Anordnung und ein positionsgenaues Halten der Batteriezellen und der gegebenenfalls vorgesehenen Batteriekühlelemente in dem Gehäuse ermöglichen, so dass ein unerwünschtes Verrutschen der Batteriezellen und/oder der Batteriekühlelemente zueinander vermieden werden kann. Durch das horizontale Verspannen mittels des Verspannelements können zudem Fertigungstoleranzen ausgeglichen werden. Zudem kann mittels des horizontalen Verspannens die Gesamtsteifigkeit des Batteriemoduls erhöht werden.

Das Verspannelement ist vorzugsweise rahmenförmig ausgebildet und kann die mindestens zwei Batteriezellen umgreifen. Zusammen mit den Batteriezellen kann das Verspannelement auch gegebenenfalls vorhandene Batteriekühlelemente mit umgreifen, welche mit den Batteriezellen in einem Paket angeordnet sein können. Das Verspannelement kann durch die rahmenförmige Ausgestaltung umlaufend um die Batteriezellen und die gegebenenfalls vorhandenen Batteriekühlelemente angeordnet sein.

Um die Wirkung der horizontalen Verspannung durch das Verspannelement erhöhen bzw. verbessern zu können, können zwei sich gegenüberliegende Querseiten des Verspannelements in einem Winkel β > 0° zu einer vertikal verlaufenden Z-Achse geneigt angeordnet sein. Durch die geneigte Anordnung der beiden Querseiten des Verspannelements kann die Position der Batteriezellen und der gegebenenfalls vorhandenen Batteriekühlelemente sicher beibehalten werden, so dass ein ungewolltes Verrutschen oder Verkippen der Batteriezellen und der gegebenenfalls vorhandenen Batteriekühlelemente verhindert werden kann. Zudem können dadurch Toleranzen ausgeglichen werden. Die beiden Querseiten sind vorzugsweise im gleichen Winkel β geneigt angeordnet. Vorzugsweise sind die Querseiten derart geneigt, dass sie in Richtung der Unterseite des Gehäuses zueinander laufend angeordnet sind, so dass sich der Raum zwischen den beiden Querseiten in Richtung der Unterseite des Gehäuses verjüngt. Der Winkel β kann beispielsweise zwischen 2° und 45°, bevorzugt zwischen 5° und 30° liegen.

Sind die sich gegenüberliegenden Querseiten des Verspannelements geneigt zueinander angeordnet, so kann zwischen den Querseiten des Verspannelements und einer Batteriezelle der mindestens zwei Batteriezellen jeweils ein Batteriekühlelement, welches eine eine Keilform aufweisende Außenfläche aufweist, angeordnet sein. Die Keilform des Batteriekühlelements kann mit der geneigten Anordnung der jeweiligen Querseite, an welcher das Batteriekühlelement anliegt, zusammenwirken. Durch die Keilform kann die Übertragung einer Anpresskraft von dem Verspannelement über das Batteriekühlelement auf die Batteriezellen verbessert werden.

Das Batteriekühlelement kann wie vorstehend beschrieben, aus- und weitergebildet sein.

Um die Positionierung der einzelnen Elemente in einem Batteriemodul weiter verbessern zu können, kann es weiter vorgesehen sein, dass das Batteriekühlelement mit einer vertikal auf das Batteriekühlelement wirkenden Kraft beaufschlagt wird. Die vertikal wirkende Kraft wirkt vorzugsweise senkrecht zu der Anpresskraft des Verspannelements. Die vertikal wirkende Kraft kann beispielsweise durch ein Zugelement oder ein Druckelement auf das Batteriekühlelement aufgebracht werden. Beispielsweise kann ein Zugelement vorgesehen sein, welches an dem Batteriekühlelement und dem Gehäuse und/oder dem Verspannelement befestigt ist, um die vertikal wirkende Kraft aufzubringen. Insbesondere in Kombination mit einer Keilform eines Batteriekühlelements und einer geneigten Anordnung einer Querseite des Verspannelements kann die vertikal wirkende Kraft vorteilhaft sein.

Nachfolgend wird die Erfindung unter Bezugnahme auf die anliegenden Zeichnungen anhand bevorzugter Ausführungsformen näher erläutert.

Es zeigen:
- Fig. 1: eine schematische Schnittdarstellung in Querrichtung eines Batteriekühlelements gemäß der Erfindung,
- Fig. 2a: eine schematische Schnittdarstellung in Längsrichtung eines weiteren Batteriekühlelements gemäß der Erfindung,
- Fig. 2b: eine schematische Schnittdarstellung in Querrichtung des in Fig. 2a gezeigten Batteriekühlelements,
- Fig. 3a: eine schematische Schnittdarstellung in Längsrichtung eines weiteren Batteriekühlelements gemäß der Erfindung,
- Fig. 3b: eine schematische Schnittdarstellung in Querrichtung des in Fig. 3a gezeigten Batteriekühlelements,
- Fig. 4: eine schematische Schnittdarstellung in Querrichtung eines weiteren Batteriekühlelements,
- Fig. 5: eine schematische Schnittdarstellung durch eine als Außenfläche ausgebildete Folie gemäß der Erfindung,
- Fig. 6: eine schematische Explosionsdarstellung einer Batteriemoduleinheit gemäß der Erfindung,
- Fig. 7: eine schematische Darstellung der in Fig. 6 gezeigten Batteriemoduleinheit in einem zusammengebauten Zustand,
- Fig. 8: eine schematische Schnittdarstellung durch eine Batteriemoduleinheit gemäß der Erfindung,
- Fig. 9: eine schematische Schnittdarstellung eines Batteriemoduls gemäß der Erfindung,
- Fig. 10 bis 15: zeigen nicht erfindungsgemässe Ausführungsformen.

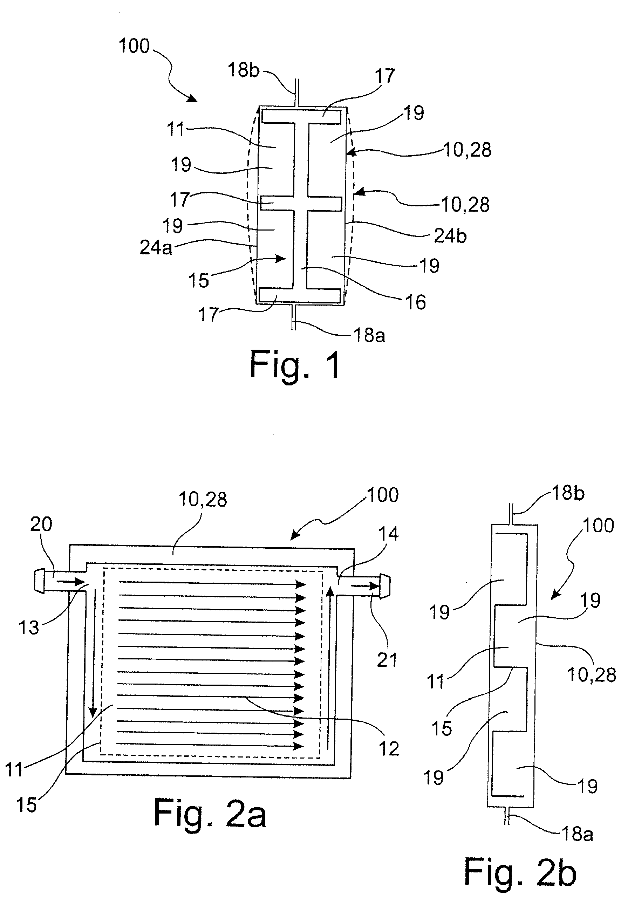

Fig. 1 zeigt eine schematische Darstellung eines Batteriekühlelements 100 in einer geschnittenen Ansicht entlang einer Querseite des Batteriekühlelements 100.

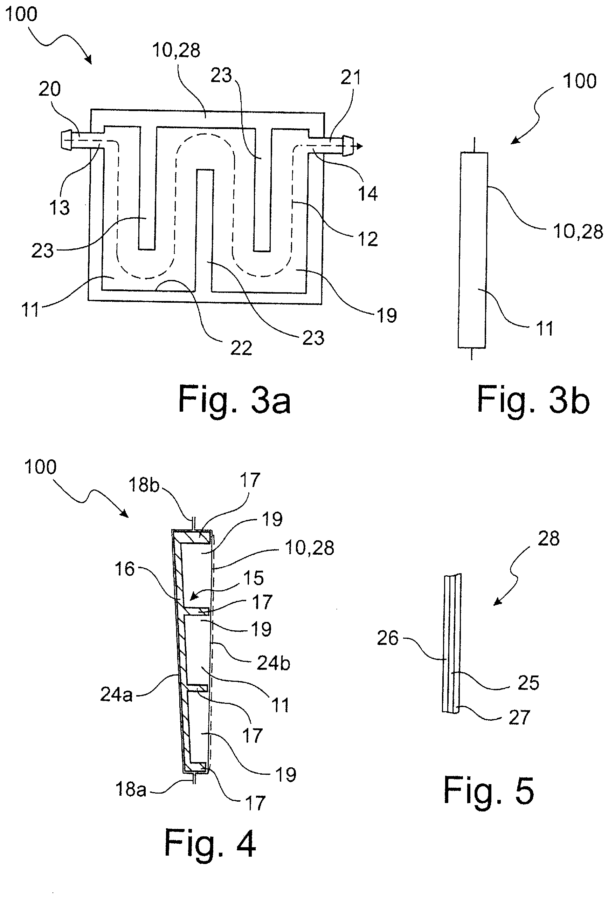

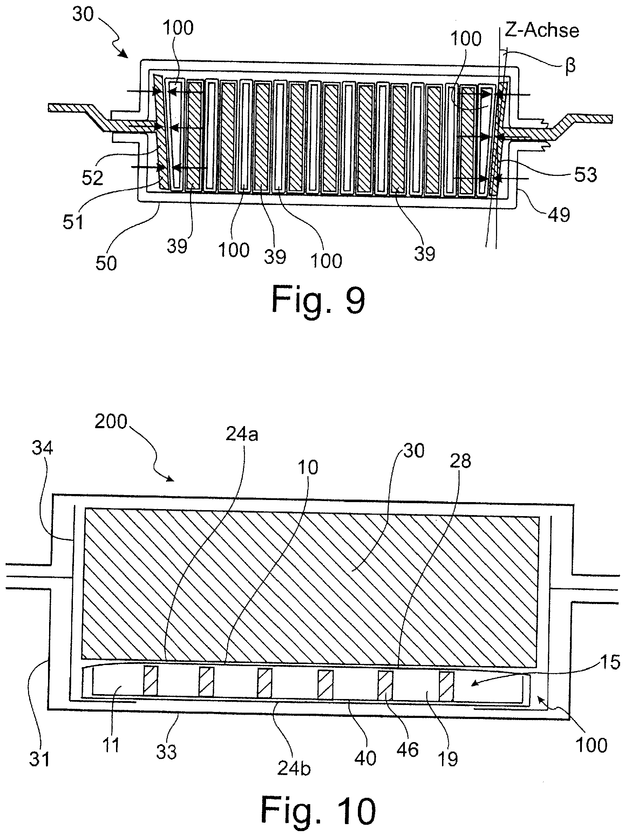

Das Batteriekühlelement 100 weist eine Außenfläche 10 zum Anliegen an einem wie in Fig. 5 bis 15 gezeigten Batteriemodul 30 einer Batteriemoduleinheit 200 und/oder zum Anliegen an einer wie beispielsweise in Fig. 9 gezeigten Batteriezelle 39 einer Batteriemoduleinheit 200 auf.

Die Außenfläche 10 umschließt bzw. begrenzt einen Innenraum 11 des Batteriekühlelements 100, wobei der Innenraum 11 von einem Kühlmedium 12, wie es beispielsweise in Fig. 2a und Fig. 3a durch die Pfeile angedeutet ist, durchflossen wird. Das Kühlmedium 12 strömt dabei von einem Kühlmediumzufluss 13, über welchen Kühlmedium 12 in den Innenraum 11 einströmt, hin zu einem Kühlmediumabfluss 14, über welchen das Kühlmedium 11 wieder aus dem Innenraum abgeführt wird, wenn es die Wärme von dem zu kühlenden Batteriemodul 30 oder der zu kühlenden Batteriezelle 39 aufgenommen hat.

Die Außenfläche 10 des Batteriekühlelements 100 ist zumindest bereichsweise bzw. abschnittsweise aus einer wärmeleitenden, flexibel ausgebildeten Folie 28 ausgebildet, welche mittels des Fluiddrucks des durch den Innenraum 11 strömenden Kühlmediums 12 verformt werden kann. Wird beispielsweise der Fluiddruck erhöht, so wird die Außenfläche 10 bzw. die Folie 28 nach außen gewölbt, wie mit der gestrichelten Linie beispielsweise in Fig. 1 angedeutet ist. Durch das nach außen Wölben der Außenfläche 10 bzw. der Folie 28 kann eine sichere, flächige Anlage der Außenfläche 10 an einem benachbart angeordneten, zu kühlenden Batteriemodul 30 bzw. Batteriezelle 39 sichergestellt werden, wobei Toleranzen bzw. Unebenheiten ausgeglichen werden können.

Die die Außenfläche 10 ausbildende Folie 28 ist, wie beispielsweise bei den in Fig. 1 bis 4 gezeigten Ausgestaltungen dargestellt ist, umlaufend um den Innenraum 11 verschweißt, wie anhand der Enden 18a, 18b der Folie 28 beispielhaft gezeigt ist. An den Enden 18a, 18b sind zwei Folienabschnitte der Folie 28 aufeinanderliegend angeordnet und durch eine Schweißverbindung stoffschlüssig miteinander verbunden.

Um die Stabilität des Batteriekühlelements 100 zu erhöhen, ist bei der in Fig. 1 gezeigten Ausgestaltung in dem Innenraum 11 des Batteriekühlelements 100 ein Stützelement 15 angeordnet. Im Gegensatz zu der Außenfläche 10 bzw. der Folie 28 des Batteriekühlelements 100 weist das Stützelement 15 eine steife Ausgestaltung auf. Die Außenfläche 10 kann zumindest bereichsweise an dem Stützelement 15 anliegen, insbesondere wenn die Außenfläche 10 nicht durch den Fluiddruck nach außen gewölbt ist.

Bei der in Fig. 1 gezeigten Ausgestaltung weist das Stützelement 15 einen Hauptsteg 16 und drei Nebenstege 17 auf, welche alle in einem 90°-Winkel zu dem Hauptsteg 16 ausgerichtet sind. Der Hauptsteg 16 erstreckt sich in eine vertikale Richtung des Batteriekühlelements 100, wohingegen die Nebenstege 17 sich in eine horizontale Richtung des Batteriekühlelements 100 erstrecken. Die Nebenstege 17 sind parallel und beabstandet zueinander angeordnet. Die Nebenstege 17 bilden zusammen mit dem Hauptsteg 16 mehrere Strömungskanäle 19 aus, durch welche das Kühlmedium 12 fließt, um den Innenraum 11 zu durchströmen. Bei der in Fig. 1 gezeigten Ausgestaltung sind vier Strömungskanäle 19 ausgebildet.

In Fig. 2a und Fig. 2b ist eine weitere Ausgestaltung eines Batteriekühlelements 100 gezeigt, welches sich von der in Fig. 1 gezeigten Ausgestaltung lediglich durch die Form des Stützelements 15 unterscheidet. Das in Fig. 2a und Fig. 2b gezeigte Stützelement 15 weist eine mäanderförmige Ausgestaltung auf, bei welcher das Stützelement 15 mehrere hintereinander angeordnete U-förmig ausgebildete Strömungskanäle 19 aufweist, wobei die Strömungskanäle 19 parallel zueinander verlaufen. Bei der in Fig. 2a und Fig. 2b gezeigten Ausgestaltung sind vier Strömungskanäle 19 parallel zueinander verlaufend angeordnet.

Ferner ist bei der in Fig. 2a und 2b gezeigten Ausgestaltung zu erkennen, dass an dem Kühlmediumzufluss 13 ein Zuflussstutzen 20 und an dem Kühlmediumabfluss 14 ein Abflussstutzen 21 angeordnet sind. Sowohl der Zuflussstutzen 20 als auch der Abflussstutzen 21 sind mit der die Außenfläche 10 bildenden Folie 28 flüssigkeitsdicht verschweißt.

In Fig. 3a und Fig. 3b ist eine weitere mögliche Ausgestaltung eines Batteriekühlelements 100 gezeigt. Bei der in Fig. 3a und 3b gezeigten Ausgestaltung ist kein Stützelement in dem Innenraum 11 angeordnet, sondern die die Außenfläche 10 bildende Folie 28 ist derart geformt, dass sie eine selbststützende Wirkung für das Batteriekühlelement 100 ausbildet. Dafür ragen Teile der die Außenfläche 10 bildenden Folie 28 in den Innenraum 11 hinein. An einer in Richtung Innenraum 11 zeigenden Innenseite 22 der die Außenfläche 10 ausbildenden Folie 28 sind hier in den Innenraum 11 ragende Wände 23 ausgebildet, welche einstückig mit der die Außenfläche 10 bildenden Folie 28 ausgebildet sind und damit aus demselben Material wie die Folie 28 ausgebildet sind. Die Wände 23 bilden Stege aus, welche in einem rechten Winkel zu der Innenseite 22 der die Außenfläche 10 bildenden Folie 28 ausgerichtet sind. Diese Wände 23 können einen mäanderförmigen Strömungskanal in dem Innenraum 11 des Batteriekühlelements 100 für das Kühlmedium 12 ausbilden. Die Strömung des Kühlmediums 12 durch den in dem Innenraum 11 ausgebildeten mäanderförmigen Strömungskanal 19 ist in Fig. 3a durch die gestrichelte Linie dargestellt.

Fig. 4 zeigt eine erfindungsgemässe Ausgestaltung eines Batteriekühlelements 100, bei welchem die Außenfläche 10 eine Keilform ausbildet. Die Längsseitenflächen 24a, 24b der Außenfläche 10 verlaufen dabei von dem zweiten Ende 18b hin zu dem ersten Ende 18a der Folie 28 bzw. der Außenfläche 10 aufeinander zu, so dass sich das Batteriekühlelement 100 von dem zweiten Ende 18b hin zu dem ersten Ende 18a verjüngt.

Bei der in Fig. 4 gezeigten Ausgestaltung ist ein Stützelement 15 in dem Innenraum 11 angeordnet, welches einen Hauptsteg 16 und vier von dem Hauptsteg 16 in einem rechten Winkel abgehende Nebenstege 17 aufweist. Der Hauptsteg 16 ist hier nicht wie bei der in Fig. 1 gezeigten Ausgestaltung mittig des Innenraumes 11 angeordnet, so dass sich beide Längsseitenflächen 24a, 24b der die Außenfläche 10 bildenden Folie 28 verformen können, sondern bei der in Fig. 4 gezeigten Ausgestaltung ist der Hauptsteg 16 außermittig, an einem Rand des Innenraumes 11 angeordnet, so dass eine der Längsseitenflächen 24a unmittelbar an dem Hauptsteg 16 anliegt. Diese Längsseitenflächen 24a ist nicht durch den Fluiddruck des Kühlmediums 12 verformbar. Bei der in Fig. 4 gezeigten Ausgestaltung ist lediglich die gegenüberliegende Längsseitenfläche 24b durch den Fluiddruck des Kühlmediums 12 verformbar, wie in Fig. 4 durch die gestrichelte Linie angedeutet gezeigt ist. Die Verformung der Längsseitenfläche 24b und damit der die Außenfläche 10 ausbildenden Folie 28 in Richtung des Innenraums 11 wird durch die Nebenstege 17 begrenzt.

Ein wie in Fig. 4 gezeigtes Batteriekühlelement 100 wird vorzugsweise bei einer Batteriemoduleinheit außen angeordnet, so dass das Batteriekühlelement 100 nur mit einer Seite und zwar der Längsseitenfläche 24b an einem Batteriemodul 30 anliegt.

Fig. 5 zeigt einen Schnitt durch einen möglichen Aufbau der die Außenfläche 10 ausbildenden Folie 28, wobei die Folie 28 hier aus einem Mehrschichtverbund ausgebildet ist. Die die Außenfläche 10 ausbildende Folie 28 ist hier aus drei Schichten ausgebildet, wobei die innenliegende Schicht 25 aus einem Metallmaterial, beispielsweise Aluminium, und die beiden außenliegenden Schichten 26, 27 jeweils aus einem Kunststoffmaterial, beispielsweise Polyethylen, ausgebildet sind.

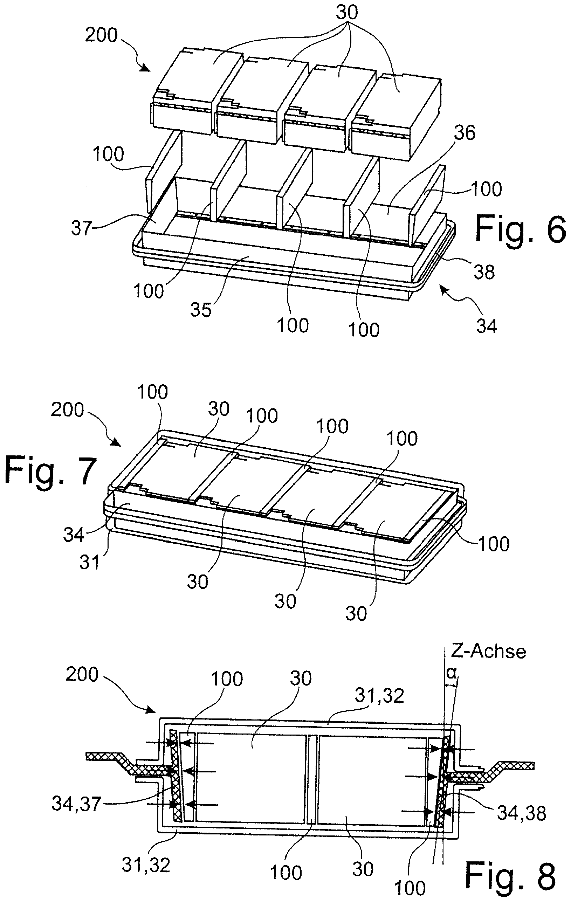

In Fig. 6 ist eine Explosionsdarstellung einer Batteriemoduleinheit 200 gezeigt, welche in Fig. 7 in einem zusammengebauten Zustand gezeigt ist. Diese weist bei der in Fig. 6 und 7 gezeigten Ausgestaltung vier nebeneinander angeordnete Batteriemodule 30 sowie fünf Batteriekühlelemente 100 auf, wobei die Batteriemodule 30 zwischen den Batteriekühlelementen 100 angeordnet sind, so dass die Batteriemodule 30 jeweils von zwei Seiten von Batteriekühlelementen 100 gekühlt werden. Fig. 6 zeigt eine exemplarische Ausgestaltung, wobei eine Batteriemoduleinheit 200 auch mehr oder weniger Batteriemodule 30 und mehr oder weniger Batteriekühlelemente 100 aufweisen kann. Fig. 8 zeigt beispielsweise eine Ausgestaltung, bei welcher die Batteriemoduleinheit 200 zwei Batteriemodule 30 und drei Batteriekühlelemente 100 aufweist.

Die jeweils zwischen zwei Batteriemodulen 30 angeordneten Batteriekühlelemente 100 können beispielsweise eine wie in Fig. 1, Fig. 2a, Fig. 2b, Fig. 3a, Fig. 3b gezeigte Ausgestaltung aufweisen. Die zwischen zwei Batteriemodulen 30 angeordneten Batteriekühlelemente 100 weisen jeweils eine rechteckförmige Ausgestaltung auf. Die beiden äußeren Batteriekühlelemente 100 sind hingegen entsprechend der in Fig. 4 gezeigten Ausgestaltung ausgebildet, indem deren Außenfläche 10 eine Keilform aufweist.

Die Batteriemodule 30 und die Batteriekühlelemente 100 sind in einem, wie Fig. 7 und Fig. 8 gezeigten Gehäuse 31 angeordnet, welches eine Oberseite 32 und eine Unterseite 33 aufweist. Das Gehäuse 31 weist keine tragende Funktion auf und kann daher aus einem Kunststoffmaterial ausgebildet sein.

Die Batteriekühlelemente 100 sind vertikal zu der Unterseite 33 des Gehäuses 31 ausgerichtet, so dass die Batteriekühlelemente 100 senkrecht stehend auf der Unterseite 33 des Gehäuses 31 positioniert sind. Durch die senkrecht stehende Anordnung der Batteriekühlelemente 100 kann eine horizontal gerichtete Wärmeübertragung von den Batteriemodulen 30 hin zu den Batteriekühlelementen 100 erfolgen, so dass die Wärmeübertragung parallel zu der Erstreckung der Unterseite 33 des Gehäuses 31 erfolgen kann.

In dem Gehäuse 31 ist ferner ein Verspannelement 34 angeordnet. Das Verspannelement 34 ist rahmenförmig ausgebildet und umgreift die als Paket angeordneten Batteriekühlelemente 100 und Batteriemodule 30. Die Batteriekühlelemente 100 und die Batteriemodule 30 sind somit von dem Verspannelement 34 umschlossen. Mittels des Verspannelements 34 sind die Batteriemodule 30 und die Batteriekühlelemente 100 in einer sich parallel zur Ausrichtung der Unterseite 33 erstreckenden horizontalen Richtung verspannt gehalten, wie in Fig. 8 mit den Pfeilen angedeutet ist.

Das Verspannelement 34 weist zwei sich gegenüberliegende Längsseiten 35, 36 und zwei sich gegenüberliegende Querseiten 37, 38 auf. Die beiden Längsseiten 35, 36 sind parallel zueinander ausgerichtet. Die beiden Querseiten 37, 38 sind hingegen in einem Winkel α > 0° zu einer vertikal verlaufenden Z-Achse geneigt angeordnet. Der Winkel α beträgt bei der hier gezeigten Ausgestaltung ca. 10°, wie in der Schnittdarstellung von Fig. 8 zu erkennen ist. Die beiden Querseiten 37, 38 sind hier im gleichen Winkel α geneigt angeordnet. Die Querseiten 37, 38 sind derart geneigt, dass sie in Richtung der Unterseite 33 des Gehäuses 31 zueinander laufend angeordnet sind, so dass sich der Raum zwischen den beiden Querseiten 37, 38 in Richtung der Unterseite 33 des Gehäuses 31 verjüngt, wie in Fig. 8 zu erkennen ist.

Das jeweils zwischen einer der Querseiten 37, 38 und einem Batteriemodul 30 angeordnete Batteriekühlelement 100 weist eine wie in Fig. 4 gezeigte Keilform auf, welche an die Neigung der Querseiten 37, 38 angepasst ist. Das eine Keilform aufweisende Batteriekühlelement 100 liegt dabei mit seiner Längsseitenfläche 24a an der Querseite 37, 38 des Verspannelements 34 an und mit seiner Längsseitenfläche 24b an dem Batteriemodul 30 an, um dieses zu kühlen.

Fig. 9 zeigt eine Schnittdarstellung eines Batteriemoduls 30, wie es beispielsweise in den Fig. 6 bis 8 gezeigt ist. In dem Batteriemodul 30 sind mehrere Batteriezellen 39 hintereinander in einem Gehäuse 49 senkrecht zu einer Unterseite 50 des Gehäuses 49 stehend oder hängend angeordnet. Durch die senkrecht stehende Anordnung der Batteriekühlelemente 100 kann eine horizontal gerichtete Wärmeübertragung von den Batteriezellen 39 hin zu den Batteriekühlelementen 100 erfolgen, so dass die Wärmeübertragung parallel zu der Erstreckung der Unterseite 50 des Gehäuses 49 erfolgen kann.

Zwischen benachbart angeordneten Batteriezellen 39 ist jeweils ein Batteriekühlelement 100 angeordnet. Batteriekühlelemente 100 und Batteriezellen 39 sind somit abwechselnd hintereinander angeordnet, wobei die beiden äußeren Elemente durch Batteriekühlelemente 100 ausgebildet sind. Die beiden außen positionierten Batteriekühlelemente 100 weisen hier auch wieder eine Keilform auf, wobei die anderen Batteriekühlelemente 100, welche zwischen den Batteriezellen 39 angeordnet sind, rechteckförmig ausgebildet sind.

Das Gehäuse 50 weist keine tragende Funktion auf und kann daher aus einem Kunststoffmaterial ausgebildet sein.

In dem Gehäuse 49 ist ferner ein Verspannelement 51 angeordnet. Das Verspannelement 51 ist rahmenförmig ausgebildet und umgreift die als Paket angeordneten Batteriekühlelemente 100 und Batteriezellen 39. Die Batteriekühlelemente 100 und die Batteriezellen 39 sind somit von dem Verspannelement 34 umschlossen. Mittels des Verspannelements 34 sind die Batteriezellen 39 und die Batteriekühlelemente 100 in einer sich parallel zur Ausrichtung der Unterseite 50 erstreckenden horizontalen Richtung, welche senkrecht zu der in Fig. 9 eingezeichneten Z-Achse verläuft, verspannt gehalten.

Das Verspannelement 51 weist zwei sich gegenüberliegende, hier nicht gezeigte Längsseiten und zwei sich gegenüberliegende Querseiten 52, 53 auf, wobei die Querseiten 52, 53 über die beiden Längsseiten miteinander verbunden sind. Die beiden Längsseiten sind parallel zueinander ausgerichtet. Die beiden Querseiten 52, 53 sind hingegen in einem Winkel β > 0° zu einer vertikal verlaufenden Z-Achse geneigt angeordnet. Der Winkel β beträgt bei der hier gezeigten Ausgestaltung ca. 10°, wie in der Schnittdarstellung von Fig. 9 zu erkennen ist. Die beiden Querseiten 52, 53 sind hier im gleichen Winkel β geneigt angeordnet. Die Querseiten 52, 53 sind derart geneigt, dass sie in Richtung der Unterseite 50 des Gehäuses 49 zueinander laufend angeordnet sind, so dass sich der Raum zwischen den beiden Querseiten 52, 53 in Richtung der Unterseite 50 des Gehäuses 49 verjüngt, wie in Fig. 9 zu erkennen ist.

Das jeweils zwischen einer der Querseiten 52, 53 und einer Batteriezelle 39 angeordnete Batteriekühlelement 100 weist eine wie in Fig. 4 gezeigte Keilform auf, welche an die Neigung der Querseiten 52, 53 angepasst ist. Das eine Keilform aufweisende Batteriekühlelement 100 liegt dabei mit seiner Längsseitenfläche 24a an der Querseite 52, 53 des Verspannelements 51 an und mit seiner Längsseitenfläche 24b an der Batteriezelle 39 an, um dieses zu kühlen.

Bei der in Fig. 10 dargestellten Ausgestaltung einer Batteriemoduleinheit 200 ist ein Batteriekühlelement 100 parallel bzw. horizontal zu der Unterseite 33 des Gehäuses 31 angeordnet, so dass das Batteriekühlelement 100 zwischen einem wie hier gezeigten Batteriemodul 30 und der Unterseite 33 des Gehäuses 31 angeordnet ist. Anstelle des in Fig. 10 gezeigten Batteriemoduls 30 können hier auch mehrere Batteriemodule 30 oder mehrere Batteriezellen 39 nebeneinander angeordnet sein, welche dann auf dem Batteriekühlelement 100 angeordnet sind.

Auch das in Fig. 10 gezeigte Batteriekühlelement 100 weist eine Außenfläche 10 auf, welche aus einer wärmeleitenden, flexibel ausgebildeten Folie 28 ausgebildet ist, so dass der Innenraum 11 des Batteriekühlelements 100 von der Folie 28 umschlossen ist. Der Kühlmittelzufluss und der Kühlmittelabfluss sind in Fig. 10 nicht dargestellt.

Das Batteriekühlelement 100 ist hier mit seiner Längsseitenfläche 24b benachbart zu der Unterseite 33 des Gehäuses 31 angeordnet. Die Längsseitenfläche 24b des Batteriekühlelements 100 erstreckt sich parallel zu der Unterseite 33 des Gehäuses 31. Die Längsseitenfläche 24a ist in Richtung des Batteriemoduls 30 gerichtet und kann sich in Abhängigkeit des Fluiddrucks des Kühlmediums in Richtung des Batteriemoduls 30 wölben, um an dem Batteriemodul 30 möglichst flächig anliegen zu können.

In dem Innenraum 11 des Batteriekühlelements 100 ist ein Stützelement 15 angeordnet. Das Stützelement 15 ist bei der hier gezeigten Ausgestaltung aus einem U-förmig ausgebildeten Plattenelement 40 ausgebildet. Ferner weist das Stützelement 15 mehrere Blöcke 46 auf, welche an dem Plattenelement 40 angeordnet sind. Die Blöcke 46 sind beabstandet zueinander auf dem Plattenelement 40 befestigt. Zwischen den Blöcken 46 kann ein Strömungskanal 19 ausgebildet sein. Die Blöcke 46 können derart zueinander positioniert sein, dass ein mäanderförmiger Strömungskanal 19 ausgebildet ist. Die Blöcke 46 sind vorzugsweise stegförmig ausgebildet. Die Blöcke 46 bilden damit Begrenzungswände für das Kühlmedium 12 beim Durchfließen des Innenraumes 11 aus.

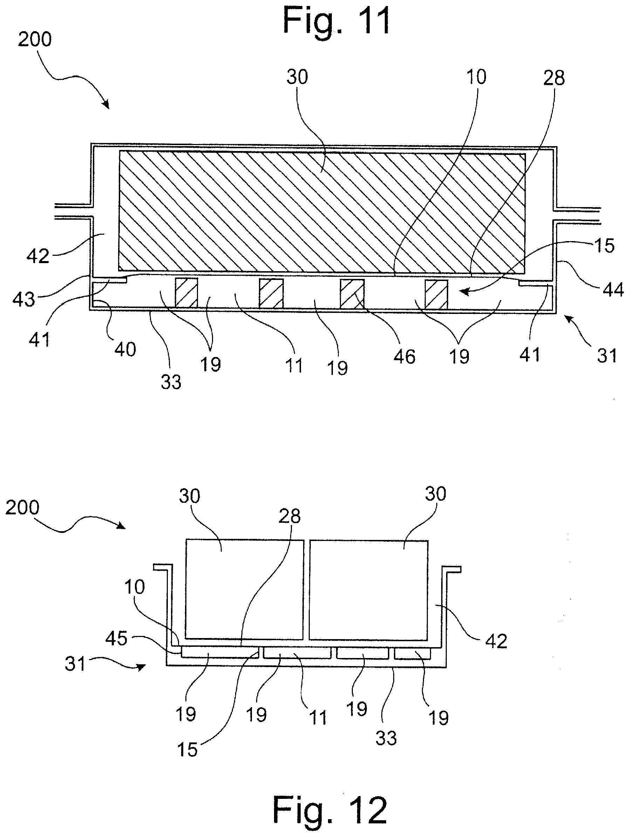

Bei der in Fig. 11 gezeigten Ausgestaltung ist das Batteriekühlelement 100 in das Gehäuse 31 integriert. Das Batteriekühlelement 100 ist dabei zumindest bereichsweise einstückig mit dem Gehäuse 31 ausgebildet, so dass zumindest ein Teil der Außenumfangsfläche des Batteriekühlelements 100 von dem Gehäuse 31, insbesondere von der Unterseite 33 des Gehäuses 31 ausgebildet ist.

Bei der in Fig. 11 gezeigten Ausgestaltung ist kein Verspannelement vorgesehen, sondern das Gehäuse 31 selber hat eine tragende Funktion. An dem Gehäuse 31, insbesondere an der Innenseite 40 des Gehäuses 31, ist ein vorzugsweise umlaufender Steg 41 ausgebildet, welcher in den Innenraum 42 des Gehäuses 31, in welchem auch die Batteriemodule 30 und/oder Batteriezellen 39 und Batteriekühlelemente 100 angeordnet sind, hineinragt.

Die Außenfläche 10 des Batteriekühlelements 100, welche an dem hier gezeigten Batteriemodul 30 anliegt und zumindest bereichsweise aus der Folie 28 ausgebildet ist, ist mit dem Gehäuse 31 verbunden. Dabei ist die Außenfläche 10 bzw. die Folie 28 an dem Steg 41 angebunden. Die Anbindung der Folie 28 an den Steg 41 kann beispielsweise durch eine Schweißverbindung oder eine Klebeverbindung ausgebildet sein. Weiter kann die Außenfläche 10 bzw. die Folie 28 auch durch ein Umspritzen mit Material des Gehäuses 31 an das Gehäuse 31 angebunden sein.

Bei der in Fig. 11 gezeigten Ausgestaltung wird der Innenraum 11 des Batteriekühlelements 100 von der Unterseite 33 des Gehäuses 31, von der Folie 28 und von Bereichen der Querseiten 43, 44 des Gehäuses 31 begrenzt.

In dem Innenraum 11 ist auch bei der in Fig. 11 gezeigten Ausgestaltung ein Stützelement 15 angeordnet, welches aus mehreren Blöcken 46, die vorzugsweise stegförmig ausgebildet sind, ausgebildet ist. Die Blöcke 46 sind beabstandet zueinander angeordnet, so dass zwischen den Blöcken 46 ein Strömungskanal 19 ausgebildet ist, welcher entsprechend der Positionierung der Blöcke 46 zueinander mäanderförmig ausgebildet sein kann. Die Blöcke 46 sind an der Unterseite 33 des Gehäuses 31 angeordnet. Vorzugsweise sind die Blöcke 46 an der Innenseite 40 des Gehäuses 31 im Bereich der Unterseite 33 des Gehäuses 31 befestigt.

Der Kühlmediumzufluss und der Kühlmediumabfluss sind in Fig. 11 nicht eingezeichnet. Der Innenraum 11 wird durch ein Kühlmedium durchströmt, wobei in Abhängigkeit des Fluiddrucks des Kühlmediums die Folie 28 in Richtung des Batteriemoduls 30 bzw. in Richtung der Batteriezellen in dem Gehäuse 31 gewölbt werden kann. Der Kühlmediumzufluss und der Kühlmediumabfluss des Batteriekühlelements 100 können unmittelbar in das Gehäuse 31 integriert sein, so dass zusätzliche in das Gehäuse 31 einzubringende Leitungen für die Zufuhr und die Abfuhr von Kühlmedium entfallen können.

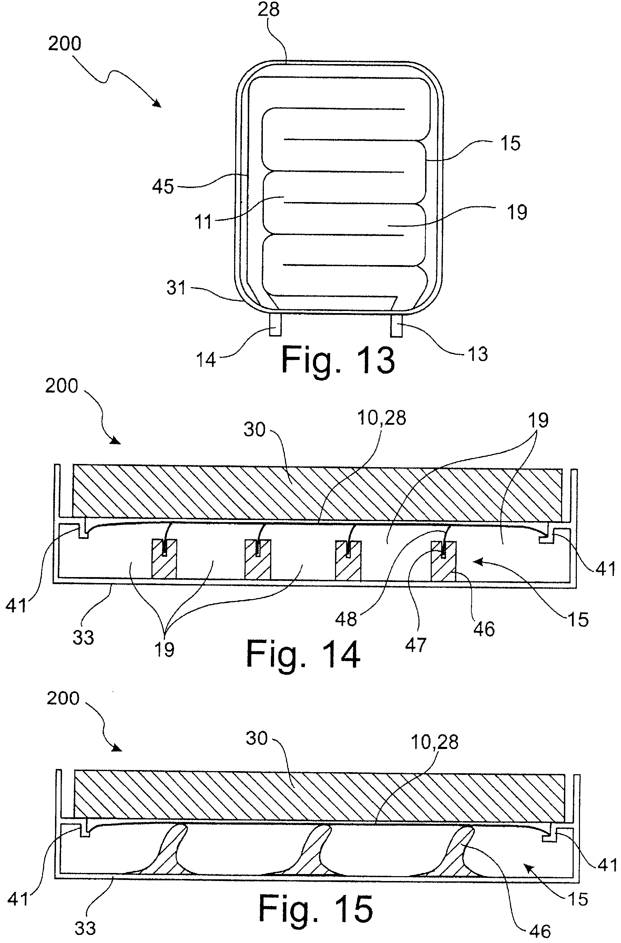

Fig. 12 zeigt eine ähnliche Ausgestaltung zu der in Fig. 11 gezeigten Ausgestaltung, bei welcher das Batteriekühlelement 100 in das Gehäuse 31 integriert ist. Dabei weist Gehäuse 31 ein Tragelement 45 auf, welches einen Teil der Außenumfangsfläche des Batteriekühlelements 100 mit ausbildet. Das Tragelement 45 ist in den Innenraum 42 des Gehäuses 31 eingesetzt. Das Tragelement 45 kann als separates Teil zu dem Gehäuse 31 oder einstückig mit dem Gehäuse 31 ausgebildet sein. Das Tragelement 45 ist derart positioniert, dass sich das Batteriekühlelement 100 horizontal und damit parallel zu der Unterseite 33 des Gehäuses 31 erstreckt. Die Folie 28 ist an ihren Endabschnitten an dem Tragelement 45 befestigt. Das Tragelement 45 ist derart geformt, dass es, wie es auch in Fig. 13 zu erkennen ist, einen mäanderförmigen Strömungskanal 19 ausbildet. Wie ferner in Fig. 13 zu erkennen ist, sind der Kühlmediumzufluss 13 und der Kühlmediumabfluss 14 in das Gehäuse 31 integriert. Das Tragelement 45 bildet gleichzeitig zu der Ausbildung einer Außenumfangsfläche des Batteriekühlelements 100 auch ein Stützelement 15 in dem Innenraum 11 des Batteriekühlelements 100 aus.

Die Batteriemodule 13 und/oder die Batteriezellen 39 sind bei der in Fig. 12 und 13 gezeigten Ausgestaltung auf dem Batteriekühlelement 100 positioniert.

In Fig. 14 und 15 sind ähnliche Ausgestaltungen wie zu der Fig. 11 gezeigten Ausgestaltung gezeigt.

Bei den in Fig. 14 und 15 gezeigten Ausgestaltungen ist ein Teil des Stützelements 15 zumindest bereichsweise elastisch ausgebildet. Durch die zumindest bereichsweise elastische Ausbildung kann eine Überströmdichtung ausgebildet werden, durch welche verhindert wird, dass das Kühlmedium 12 durch einen Spalt zwischen den Blöcken 46 und der Folie 28 strömen kann und damit gerade nicht entlang des eigentlichen Strömungskanals 19. Die Ausbildung eines derartigen Spalts kann durch die elastische Ausbildung verhindert werden, da durch die elastische Ausbildung sichergestellt werden kann, dass die Konstruktion des Stützelements 15 auch bei einer Wölbung der Folie 28 dichtend an der Folie 28 anliegend bleibt.

Die elastische Ausbildung ist vorzugsweise im Bereich der Blöcke 46 vorgesehen. Die elastische Ausbildung kann durch Verwendung eines elastomeren Kunststoffs erreicht werden. Um besonders effizient ein Überströmen des Kühlmediums 12 verhindern zu können, ist das Stützelement 15 im Bereich seiner elastischen Ausbildungen in Richtung des Kühlmediumzuflusses 13 geneigt angeordnet, wie in Fig. 14 und 15 zu erkennen ist, so dass die elastischen Ausbildungen eine Bogenform ausbilden.

Bei der in Fig. 14 gezeigten Ausgestaltung ist für die elastische Ausbildung in den Blöcken 46 jeweils eine insbesondere nutförmige Ausnehmung 47 ausgebildet, in welche jeweils eine elastisch ausgebildeter streifenförmiger Körper 48 eingesetzt ist. Der streifenförmige Körper 48 kann stoffschlüssig, kraftschlüssig und/oder formschlüssig in der nutförmigen Ausnehmung 47 befestigt sein. Mittels der streifenförmigen Körper 48 kann die elastische Ausbildung des Stützelements 15 erreicht werden. Die streifenförmige Körper 48 bilden eine Überstromdichtung für das Kühlmedium 12 aus, indem die streifenförmigen Körper 48 dichtend an der Folie 28 anliegen. Die streifenförmigen Körper 48 sind bei der hier gezeigten Ausgestaltung nicht gerade, sondern gebogen bzw. geneigt ausgebildet, wodurch auch die Anlagefläche der streifenförmigen Körper 48 an der Folie 28 vergrößert werden kann, wodurch wiederum die Dichtigkeit verbessert werden kann.

Fig. 15 zeigt eine Ausgestaltung, bei welcher die Blöcke 46 selber die elastische Ausbildung des Stützelements 15 ausbilden. Jeder Block 46 ist dabei vollständig aus einem elastischen Kunststoffmaterial ausgebildet. Es ist aber auch möglich, dass die Blöcke 46 nur teilweise aus einem elastischen Kunststoffmaterial ausgebildet sind. Bei der Fig. 15 gezeigten Ausgestaltung ist durch die elastische Ausbildung des gesamten Blocks 46 auch der gesamte Block 46 geneigt angeordnet. Der gesamte Block 46 bildet damit eine Überströmdichtung aus.

### Bezugszeichenliste

- 100: Batteriekühlelement
- 200: Batteriemoduleinheit
- 10: Außenfläche
- 11: Innenraum
- 12: Kühlmedium
- 13: Kühlmediumzufluss
- 14: Kühlmediumabfluss
- 15: Stützelement
- 16: Hauptsteg
- 17: Nebensteg
- 18a: Erstes Ende
- 18b: Zweites Ende
- 19: Strömungskanal
- 20: Zuflussstutzen
- 21: Abflussstutzen
- 22: Innenseite
- 23: Wand
- 24a, 24b: Längsseitenfläche
- 25: Innenliegende Schicht
- 26: Außenliegende Schicht
- 27: Außenliegende Schicht
- 28: Folie
- 30: Batteriemodul
- 31: Gehäuse
- 32: Oberseite
- 33: Unterseite
- 34: Verspannelement
- 35: Längsseite
- 36: Längsseite
- 37: Querseite
- 38: Querseite
- 39: Batteriezelle
- 40: Plattenelement
- 41: Steg
- 42: Innenraum
- 43: Querseite
- 44: Querseite
- 45: Tragelement
- 46: Block
- 47: Nutförmige Ausnehmung
- 48: Streifenförmiger Körper
- 49: Gehäuse
- 50: Unterseite
- 51: Verspannelement
- 52: Querseite
- 53: Querseite

## Patentansprüche

1. Batteriemodul (30), mit einem Gehäuse (49), mindestens zwei in dem Gehäuse (49) angeordneten Batteriezellen (39) und mit mindestens einem in dem Gehäuse (49) angeordneten Batteriekühlelement (100),
das Batteriekühlelement (100) mit
einer Außenfläche (10) zum zumindest bereichsweisen Anliegen an einer Batteriezelle (39) und/oder zum zumindest bereichsweisen Anliegen an einem mindestens zwei Batteriezellen (39) aufweisenden Batteriemodul (30), einem von der Außenfläche (10) zumindest bereichsweise umschlossenen Innenraum (11) zur Aufnahme eines Kühlmediums (12), und
einem mit dem Innenraum (11) verbundenen Kühlmediumzufluss (13) und einem mit dem Innenraum (11) verbundenen Kühlmediumabfluss (14),
wobei die Außenfläche (10) zumindest bereichsweise aus einer wärmeleitenden, flexibel ausgebildeten Folie (28) ausgebildet ist, welche durch einen Fluiddruck des Kühlmediums (12) formbar ist, wobei mindestens zwei Batteriekühlelemente (100) in dem Gehäuse (49) angeordnet sind, welche vertikal zu der Unterseite (50) des Gehäuses (49) ausgerichtet angeordnet sind, **dadurch gekennzeichnet,**
**dass** die Außenfläche (10) der mindestens zwei Batteriekühlelemente (100), welche vertikal zu der Unterseite (50) des Gehäuses (49) ausgerichtet sind, eine Keilform ausbildet.

2. Batteriemodul (30) nach Anspruch 1,
**dadurch gekennzeichnet, dass** die Folie (28) aus einem Mehrschichtverbund ausgebildet ist, wobei optional der Mehrschichtverbund ein Kunststoffmaterial und ein Metallmaterial aufweist, wobei optional.
das Kunststoffmaterial aus einem Polyethylen, Polyisobutylen, Polyvinylbutyral, Ethylenvinylacetat, Polyacrylat, Polymethylenacrylat, Polyurethan, vorgereckten Polypropylen, Polyvinylacetat 5, Ethylenvinylacetat und/oder einem thermoplastischen Elastomer auf Urethanbasis ist.

3. Batteriemodul (30) nach einem der Ansprüche 1 bis 2, **dadurch gekennzeichnet, dass** in dem Innenraum (11) ein Stützelement (15) angeordnet ist.

4. Batteriemodul (30) nach Anspruch 3,
**dadurch gekennzeichnet, dass** das Stützelement (15) eine mäanderförmige Ausgestaltung aufweist, und/oder
dass das Stützelement (15) einen Hauptsteg (16) und mindestens zwei in einem 90°-Winkel zu dem Hauptsteg (15) ausgerichtete Nebenstege (16) aufweist.

5. Batteriemodul (30) nach einem der Ansprüche 3 oder 4, **dadurch gekennzeichnet, dass** das Stützelement (15) zumindest bereichsweise elastisch ausgebildet ist.

6. Batteriemodul (30) nach einem der Ansprüche 1 oder 2, **dadurch gekennzeichnet, dass** die Folie (28) derart geformt ist, dass die Folie (28) einen mäanderförmigen Strömungskanal (19) in dem Innenraum (11) ausbildet.

7. Batteriemodul (30) nach einem der Ansprüche 1 bis 6, **dadurch gekennzeichnet, dass** der Kühlmediumzufluss (13) einen Zuflussstutzen (20) und der Kühlmediumabfluss (14) einen Abflussstutzen (21) aufweisen, wobei der Zuflussstutzen (20) und der Abflussstutzen (21) mit der die Außenfläche (10) bildenden Folie verschweißt ist.

8. Batteriemoduleinheit (200), mit
einem eine Oberseite (32) und eine Unterseite (33) aufweisenden Gehäuse (31),
mindestens einem Batteriekühlelement (100), und
mindestens einem mindestens zwei Batteriezellen (39) aufweisenden Batteriemodul (30) gemäß einem der Ansprüche 1-7.

9. Batteriemoduleinheit (200) nach Anspruch 8,
**dadurch gekennzeichnet, dass** ein Verspannelement (34) vorgesehen ist, mittels welchem die mindestens zwei Batteriezellen (39) und/oder das mindestens eine Batteriemodul (30) in einer sich parallel zur Ausrichtung der Unterseite (33) erstreckenden horizontalen Richtung verspannt gehalten sind,
dass das Verspannelement (34) rahmenförmig ausgebildet ist und die mindestens zwei Batteriezellen (39) und/oder das mindestens eine Batteriemodul (30) umgreift,
dass zwei sich gegenüberliegende Querseiten (37, 38) des Verspannelements (34) in einem Winkel α > 0° zu einer vertikal verlaufenden Z-Achse geneigt angeordnet sind, und
dass zwischen den Querseiten (37, 38) des Verspannelements (34) und einem Batteriemodul (30) des mindestens einem Batteriemoduls und/oder einer Batteriezelle (39) der mindestens zwei Batteriezellen jeweils ein Batteriekühlelement (100), welches eine Keilform aufweisende Außenfläche (10) aufweist, angeordnet ist.

10. Batteriemoduleinheit (200) nach einem der Ansprüche 8 oder 9,
**dadurch gekennzeichnet, dass** mindestens eines des mindestens einen Batteriekühlelements (100) horizontal zu der Unterseite (33) des Gehäuses (31) ausgerichtet angeordnet ist.

11. Batteriemoduleinheit (200) nach einem der Ansprüche 8 bis 10,
**dadurch gekennzeichnet, dass** das Gehäuse (31) aus einem Kunststoffmaterial ausgebildet ist, und/oder
dass das Batteriekühlelement (100) in das Gehäuse (31) integriert ist, und/oder
dass ein Teil einer Außenumfangsfläche des Batteriekühlelements (100) durch die Unterseite (33) des Gehäuses (31) ausgebildet ist, und/oder dass die Folie (28) des Batteriekühlelements (100) an dem Gehäuse (31) befestigt ist, und/oder
dass das Gehäuse ein Tragelement (45) aufweist, an welchem die Folie (28) des Batteriekühlelements (100) befestigt ist.

12. Batteriemoduleinheit (200), mit
einem eine Oberseite (32) und eine Unterseite (33) aufweisenden Gehäuse (31),
mindestens einem mindestens zwei Batteriezellen (39) aufweisenden Batteriemodul (30) gemäß der Ansprüche 1-7, und
einem Verspannelement (34), mittels welchem das mindestens eine Batteriemodul (30) in einer sich parallel zur Ausrichtung der Unterseite (33) erstreckenden horizontalen Richtung verspannt gehalten sind.

13. Batteriemoduleinheit (200) nach Anspruch 12,
**dadurch gekennzeichnet, dass** das Verspannelement (34) rahmenförmig ausgebildet ist und dass mindestens ein Batteriemodul (30) umgreift.

14. Batteriemoduleinheit (200) nach Anspruch 12 oder 13,
**dadurch gekennzeichnet, dass** zwei sich gegenüberliegende Querseiten (37, 38) des Verspannelements (34) in einem Winkel α > 0° zu einer vertikal verlaufenden Z-Achse geneigt angeordnet sind, wobei optional
zwischen den Querseiten (37, 38) des Verspannelements (34) und einem Batteriemodul (30) des mindestens einen Batteriemoduls und/oder einer Batteriezelle (39) der mindestens zwei Batteriezellen jeweils ein Batteriekühlelement (100), welches eine eine Keilform aufweisende Außenfläche (10) aufweist, angeordnet ist.

15. Batteriemodul (30) nach einem der Ansprüche 1-7 **dadurch gekennzeichnet, dass** das Batteriemodul (30) ein Verspannelement (51) aufweist, mittels welchem die mindestens zwei Batteriezellen (39) in einer sich parallel zur Ausrichtung der Unterseite (50) erstreckenden horizontalen Richtung verspannt gehalten sind, und/oder
dass das Verspannelement (51) rahmenförmig ausgebildet ist und die mindestens zwei Batteriezellen (39) umgreift, und/oder
dass zwei sich gegenüberliegende Querseiten (52, 53) des Verspannelements (51) in einem Winkel β > 0° zu einer vertikal verlaufenden Z-Achse geneigt angeordnet sind, und/oder
dass zwischen den Querseiten (52, 53) des Verspannelements (51) und einer Batteriezelle (39) der mindestens zwei Batteriezellen (39) jeweils ein Batteriekühlelement (100), welches eine Keilform aufweist, angeordnet ist.

## Claims

1. Battery module (30), comprising a housing (49), at least two battery cells (39) arranged in the housing (49), and comprising at least one battery cooling element (100) arranged in the housing (49),
the battery cooling element (100) comprising an outer surface (10) for resting at least in regions against a battery cell (39) and/or for resting at least in regions against a battery module (30) comprising at least two battery cells (39),
an inner chamber (11) for receiving a cooling medium (12), which inner chamber is surrounded at least in regions by the outer surface (10), and
a cooling medium inlet (13) connected to the inner chamber (11) and a cooling medium outlet (14) connected to the inner chamber (11),
the outer surface (10) being made, at least in regions, of a thermally conductive, flexible film (28) which can be shaped by a fluid pressure of the cooling medium (12), wherein at least two battery cooling elements (100) are arranged in the housing (49), which battery cooling elements are arranged so as to be aligned vertically with respect to the underside (50) of the housing (49), **characterized in that**,
the outer surface (10) of the at least two battery cooling elements (100), which are arranged vertically with respect to the underside(50) of the housing (49) is wedge-shaped.

2. Battery module (30) according to claim 1,
**characterized in that** the film (28) is formed from a multilayer composite, wherein optionally the multilayer composite comprises a plastics material and a metal material, wherein optionally
the plastics material is made of a polyethylene, polyisobutylene, polyvinyl butyral, ethylene vinyl acetate, polyacrylate, polymethylene acrylate, polyurethane, prestretched polypropylene, polyvinyl acetate 5, ethylene vinyl acetate and/or a thermoplastic elastomer based on urethane.

3. Battery module (30) according to any of claims 1 to 2, **characterized in that** a support element (15) is arranged in the inner chamber (11).

4. Battery module (30) according to claim 3,
**characterized in that** the support element (15) has a meandering shape, and/or
that the support element (15) comprises a main rib (16) and at least two secondary ribs (16) aligned at a 90° angle with respect to the main rib (15).

5. Battery module (30) according to any of claims 3 or 4, **characterized in that** the support element (15) is resilient at least in regions.

6. Battery module (30) according to any of claims 1 or 2, **characterized in that** the film (28) is shaped in such a way that the film (28) forms a meandering flow channel (19) in the inner chamber (11).

7. Battery module (30) according to any of claims 1 to 6, **characterized in that** the cooling medium inlet (13) has an inlet connector (20) and the cooling medium outlet (14) has an outlet connector (21), the inlet connector (20) and the outlet connector (21) being welded to the film forming the outer surface (10).

8. Battery module unit (200), comprising
a housing (31) comprising a top side (32) and an underside(33),
at least one battery cooling element (100), and
at least one battery module (30) according to any of claims 1 to 7 comprising at least two battery cells (39).

9. Battery module unit (200) according to claim 8,
**characterized in that** a bracing element (34) is provided, by means of which the at least two battery cells (39) and/or the at least one battery module (30) are held braced in a horizontal direction extending parallel to the alignment of the underside (33),
that the bracing element (34) is in the form of a frame and encloses the at least two battery cells (39) and/or the at least one battery module (30),
that two opposing transverse sides (37, 38) of the bracing element (34) are inclined at an angle α > 0° with respect to a vertical Z-axis, and
that a battery cooling element (100) which comprises a wedge-shaped outer surface (10) is arranged between each of the transverse sides (37, 38) of the bracing element (34) and a battery module (30) of the at least one battery module and/or a battery cell (39) of the at least two battery cells.

10. Battery module unit (200) according to any of claims 8 or 9,
**characterized in that** at least one of the at least one battery cooling elements (100) is arranged so as to be aligned horizontally with respect to the underside (33) of the housing (31).

11. Battery module unit (200) according to any of claims 8 to 10,
**characterized in that** the housing (31) is made of a plastics material, and/or
that the battery cooling element (100) is integrated into the housing (31), and/or
that part of an outer peripheral surface of the battery cooling element (100) is formed by the underside (33) of the housing (31), and/or
the film (28) of the battery cooling element (100) is fastened to the housing (31), and/or
that the housing has a bearing element(45) to which the film (28) of the battery cooling element (100) is fastened.

12. Battery module unit (200), comprising
a housing (31) comprising a top side (32) and an underside (33),
at least one battery module (30) according to claims 1-7 comprising at least two battery cells(39), and
a bracing element (34) by means of which the at least one battery module(30) are held braced in a horizontal direction extending parallel to the alignment of the underside (33).

13. Battery module unit (200) according to claim 12,
**characterized in that** the bracing element (34) is in the form of a frame and encloses the at least one battery module (30) .

14. Battery module unit (200) according to either claim 12 or claim 13,
**characterized in that** two opposing transverse sides (37, 38) of the bracing element (34) are inclined at an angle α > 0° with respect to a vertical Z-axis, wherein optionally
a battery cooling element (100) which comprises a wedge-shaped outer surface (10) is arranged between each of the transverse sides (37, 38) of the bracing element (34) and a battery module (30) of the at least one battery module and/or a battery cell (39) of the at least two battery cells.

15. Battery module (30) according to any of claims 1 to 7,
**characterized in that** the battery module comprises a bracing element (51) by means of which the at least two battery cells (39) are held braced in a horizontal direction extending parallel to the alignment of the underside (50), and/or
that the bracing element (51) is in the form of a frame and encloses the at least two battery cells (39), and/or that two opposing transverse sides (52, 53) of the bracing element (51) are inclined at an angle β > 0° with respect to a vertical Z-axis, and/or
that a wedge-shaped battery cooling element (100) is arranged between each of the transverse sides (52, 53) of the bracing element (51) and a battery cell (39) of the at least two battery cells (39).

## Revendications

1. Module de batterie (30), comportant un boîtier (49), au moins deux cellules de batterie (39) disposées dans le boîtier (49) et comportant au moins un élément de refroidissement de batterie (100) disposé dans le boîtier (49), l'élément de refroidissement de batterie (100) comportant une surface externe (10) pour le placement, au moins dans certaines régions, contre une cellule de batterie (39) et/ou pour le placement, au moins dans certaines régions, contre un module de batterie (30) présentant au moins deux cellules de batterie (39), un espace interne (11) entouré au moins dans certaines régions par la surface externe (10) et destiné à recevoir un milieu de refroidissement (12), et une alimentation en milieu de refroidissement (13) reliée à l'espace interne (11) et une évacuation de milieu de refroidissement (14) reliée à l'espace interne (11), la surface externe (10) étant réalisée, au moins dans certaines régions, à partir d'une feuille (28) conductrice de chaleur et flexible, laquelle peut être façonnée par une pression fluidique du milieu de refroidissement (12), au moins deux éléments de refroidissement de batterie (100) étant disposés dans le boîtier (49), lesquels sont disposés de manière à être orientés verticalement par rapport à la face inférieure (50) du boîtier (49), **caractérisé en ce que** la surface externe (10) des au moins deux éléments de refroidissement de batterie (100), lesquels sont orientés verticalement par rapport à la face inférieure (50) du boîtier (49), réalise une forme en coin.

2. Module de batterie (30) selon la revendication 1,
**caractérisé en ce que** la feuille (28) est réalisée à partir d'un composite multicouche, le composite multicouche présentant éventuellement un matériau synthétique et un matériau métallique, le matériau synthétique étant éventuellement en polyéthylène, polyisobutylène, polybutyral de vinyle, éthylène-acétate de vinyle, polyacrylate, poly(acrylate de méthylène), polyuréthane, polypropylène préétiré, polyacétate de vinyle 5, éthylène-acétate de vinyle et/ou en un élastomère thermoplastique à base d'uréthane.

3. Module de batterie (30) selon l'une des revendications 1 à 2,
**caractérisé en ce qu'**un élément d'appui (15) est disposé dans l'espace interne (11).

4. Module de batterie (30) selon la revendication 3, **caractérisé en ce que** l'élément d'appui (15) présente une configuration sous forme de méandres et/ou **en ce que** l'élément d'appui (15) présente une traverse principale (16) et au moins deux traverses secondaires (16) orientées selon un angle de 90° par rapport à la traverse principale (15).

5. Module de batterie (30) selon l'une des revendications 3 ou 4,
**caractérisé en ce que** l'élément d'appui (15) est réalisé, au moins dans certaines régions, de manière élastique.

6. Module de batterie (30) selon l'une des revendications 1 ou 2,
**caractérisé en ce que** la feuille (28) est façonnée de manière telle que la feuille (28) réalise un canal d'écoulement sous forme de méandres (19) dans l'espace interne (11).

7. Module de batterie (30) selon l'une des revendications 1 à 6,
**caractérisé en ce que** l'alimentation en milieu de refroidissement (13) présente une tubulure d'alimentation (20) et l'évacuation de milieu de refroidissement (14) présente une tubulure d'évacuation (21), la tubulure d'alimentation (20) et la tubulure d'évacuation (21) étant soudées à la feuille formant la surface externe (10).

8. Unité de module de batterie (200), comportant un boîtier (31) présentant une face supérieure (32) et une face inférieure (33), au moins un élément de refroidissement de batterie (100), et au moins un module de batterie (30) selon l'une des revendications 1 à 7 présentant au moins deux cellules de batterie (39).

9. Unité de module de batterie (200) selon la revendication 8,
**caractérisée en ce qu'**un élément de serrage (34) est prévu, au moyen duquel les au moins deux cellules de batterie (39) et/ou l'au moins un module de batterie (30) sont maintenus de manière serrée dans une direction horizontale s'étendant parallèlement à l'orientation de la face inférieure (33), **en ce que** l'élément de serrage (34) est réalisé sous forme de cadre et enserre les au moins deux cellules de batterie (39) et/ou l'au moins un module de batterie (30),
**en ce que** deux faces transversales (37, 38) opposées de l'élément de serrage (34) sont disposées de manière inclinée selon un angle α > 0° par rapport à un axe Z s'étendant verticalement, et
**en ce que** respectivement un élément de refroidissement de batterie (100), lequel présente une surface externe (10) présentant une forme en coin, est disposé entre les faces transversales (37, 38) de l'élément de serrage (34) et un module de batterie (30) de l'au moins un module de batterie et/ou une cellule de batterie (39) des au moins deux cellules de batterie.

10. Unité de module de batterie (200) selon l'une des revendications 8 ou 9,
**caractérisée en ce qu'**au moins l'un de l'au moins un élément de refroidissement de batterie (100) est disposé de manière à être orienté horizontalement par rapport à la face inférieure (33) du boîtier (31).

11. Unité de module de batterie (200) selon l'une des revendications 8 à 10,
**caractérisée en ce que** le boîtier (31) est réalisé en un matériau synthétique, et/ou **en ce que** l'élément de refroidissement de batterie (100) est intégré dans le boîtier (31), et/ou
**en ce qu'**une partie d'une surface périphérique externe de l'élément de refroidissement de batterie (100) est réalisée par la face inférieure (33) du boîtier (31), et/ou **en ce que** la feuille (28) de l'élément de refroidissement de batterie (100) est fixée au boîtier (31), et/ou
**en ce que** le boîtier présente un élément de support (45) auquel est fixée la feuille (28) de l'élément de refroidissement de batterie (100).

12. Unité de module de batterie (200), comportant
un boîtier (31) présentant une face supérieure (32) et une face inférieure (33),
au moins un module de batterie (30) selon les revendications 1 à 7 présentant au moins deux cellules de batterie (39), et
un élément de serrage (34) au moyen duquel l'au moins un module de batterie (30) est maintenu de manière serrée dans une direction horizontale s'étendant parallèlement à l'orientation de la face inférieure (33).

13. Unité de module de batterie (200) selon la revendication 12,
**caractérisée en ce que** l'élément de serrage (34) est réalisé sous forme de cadre et **en ce qu'**enserre au moins un module de batterie (30).

14. Unité de module de batterie (200) selon la revendication 12 ou 13,
**caractérisée en ce que** deux faces transversales (37, 38) opposées de l'élément de serrage (34) sont disposées de manière inclinée selon un angle α > 0° par rapport à un axe Z s'étendant verticalement, éventuellement, respectivement un élément de refroidissement de batterie (100), lequel présente une surface externe (10) présentant une forme en coin, étant disposé entre les faces transversales (37, 38) de l'élément de serrage (34) et un module de batterie (30) de l'au moins un module de batterie et/ou une cellule de batterie (39) des au moins deux cellules de batterie.

15. Module de batterie (30) selon l'une des revendications 1 à 7
**caractérisé en ce que** le module de batterie (30) présente un élément de serrage (51) au moyen duquel les au moins deux cellules de batterie (39) sont maintenues de manière serrée dans une direction horizontale s'étendant parallèlement à l'orientation de la face inférieure (50), et/ou
**en ce que** l'élément de serrage (51) est réalisé sous forme de cadre et enserre les au moins deux cellules de batterie (39), et/ou
**en ce que** deux faces transversales (52, 53) opposées de l'élément de serrage (51) sont disposées de manière inclinée selon un angle β > 0° par rapport à un axe Z s'étendant verticalement, et/ou
**en ce que** respectivement un élément de refroidissement de batterie (100), lequel présente une forme en coin, est disposé entre les faces transversales (52, 53) de l'élément de serrage (51) et une cellule de batterie (39) des au moins deux cellules de batterie (39).
